(19) Europäisches Patentamt / European Patent Office / Office européen des brevets

(11) **EP 1 436 658 B1**

(12) **EUROPÄISCHE PATENTSCHRIFT**

(45) Veröffentlichungstag und Bekanntmachung des Hinweises auf die Patenterteilung:
**18.06.2008 Patentblatt 2008/25**

(21) Anmeldenummer: **02777053.6**

(22) Anmeldetag: **10.09.2002**

(51) Int Cl.:
*G02B 21/00* (2006.01)    *G02B 27/22* (2006.01)

(86) Internationale Anmeldenummer:
**PCT/EP2002/010122**

(87) Internationale Veröffentlichungsnummer:
**WO 2003/023482 (20.03.2003 Gazette 2003/12)**

(54) **VERFAHREN UND VORRICHTUNG ZUR OPTISCHEN UNTERSUCHUNG EINES OBJEKTES**

METHOD AND DEVICE FOR OPTICALLY EXAMINING AN OBJECT

PROCEDE ET DISPOSITIF POUR CONTROLER OPTIQUEMENT UN OBJET

(84) Benannte Vertragsstaaten:
**DE FR GB**

(30) Priorität: **11.09.2001 DE 10144709**
**04.09.2002 DE 10241290**

(43) Veröffentlichungstag der Anmeldung:
**14.07.2004 Patentblatt 2004/29**

(73) Patentinhaber: **Leica Microsystems CMS GmbH**
**35578 Wetzlar (DE)**

(72) Erfinder: **SIECKMANN, Franck**
**44879 Bochum (DE)**

(74) Vertreter: **Hössle Kudlek & Partner**
**Patentanwälte**
**Postfach 10 23 38**
**70019 Stuttgart (DE)**

(56) Entgegenhaltungen:
EP-A- 0 769 159        US-A- 4 689 491
US-A- 5 804 813

- **ERHARDT A ET AL: "RECONSTRUCTING 3-D LIGHT-MICROSCOPIC IMAGES BY DIGITAL IMAGE PROCESSING" APPLIED OPTICS, OPTICAL SOCIETY OF AMERICA, WASHINGTON, US, Bd. 24, Nr. 2, 15. Januar 1985 (1985-01-15), Seiten 194-200, XP001040866 ISSN: 0003-6935**
- **TIZIANI H J ET AL: "THREE-DIMENSIONAL IMAGE SENSING BY CHROMATIC CONFOCAL MICROSCOPY" APPLIED OPTICS, OPTICAL SOCIETY OF AMERICA, WASHINGTON, US, Bd. 33, Nr. 10, 1. April 1994 (1994-04-01), Seiten 1838-1843, XP000434202 ISSN: 0003-6935**
- **PATENT ABSTRACTS OF JAPAN vol. 1999, no. 12, 29. Oktober 1999 (1999-10-29) -& JP 11 174334 A (YOKOGAWA ELECTRIC CORP), 2. Juli 1999 (1999-07-02)**
- **PATENT ABSTRACTS OF JAPAN vol. 2000, no. 14, 5. März 2001 (2001-03-05) -& JP 2000 316120 A (DENSO CORP), 14. November 2000 (2000-11-14)**

**Beschreibung**

Die Erfindung betrifft ein Verfahren zur optischen Untersuchung eines Objektes.

Bei der Untersuchung von Proben mit Hilfe eines Mikroskops besteht oftmals das Bedürfnis, die dreidimensionale Ausgestaltung der Oberfläche des Objektes zu rekonstruieren. Hierzu kann beispielsweise die konfokale Scanmikroskopie eingesetzt werden. Dabei wird eine Probe mit dem Fokus eines Lichtstrahls punktweise in einer Ebene abgetastet, sodass ein Bild, allerdings mit geringer Tiefenschärfe, dieser Ebene erhalten wird. Durch die Aufnahme einer Mehrzahl von verschiedenen Ebenen und durch eine entsprechende Bildverarbeitung kann das Objekt dann dreidimensional dargestellt werden. Ein derartiges konfokale Scanmikroskopieverfahren ist beispielsweise aus der US 6,128,077 bekannt. Die bei der konfokalen Scanmikroskopie eingesetzten optischen Komponenten sind allerdings sehr teuer und fordern neben einem guten technischen Verständnis auch sehr viel Justagearbeit.

Aus der US 6,055,097 ist weiterhin ein Verfahren zur Lumineszenzmikroskopie bekannt. Dabei werden in eine Probe Farbstoffe eingebracht, die unter geeigneten Beleuchtungsbedingungen fluoreszieren, sodass mit der Bestrahlung die Lokalisierung der Farbstoffe in der Probe möglich wird. Zur Erzeugung eines räumlichen Bildes werden eine Anzahl von Bildern in unterschiedlichen Fokusebenen aufgenommen. Jedes dieser Bilder enthält Bildinformationen, die unmittelbar aus der Fokusebene stammen, ebenso wie solche Bildinformationen, die aus Raumabschnitten des Objektes stammen, die außerhalb der Fokusebene liegen. Zur Ermittlung eines scharfen Bildes ist es erforderlich, die nicht aus der Fokusebene stammenden Bildanteile zu eliminieren. Hierzu wird vorgeschlagen, das Mikroskop mit einem optischen System zu versehen, das es ermöglicht, die Probe mit einem speziellen Beleuchtungsfeld, etwa einer stehenden Welle oder einem nicht-periodischen Anregungsfeld zu beleuchten.

Zur Verbesserung der dreidimensionalen Rekonstruktion eines Objektes mit einem Mikroskop wurde von der Anmelderin in der deutschen Patentanmeldung mit der Anmeldenummer 100 50 963.0 bereits ein verbessertes Verfahren und eine verbesserte Vorrichtung vorgeschlagen. Dabei wird mittels einer Bildaufnahmeeinheit, etwa einer CCD-Kamera, eine Serie von Bildern eines Objektes in verschiedenen z-Ebenen aufgenommen. Damit liegt also ein Bildstapel von Ebenenbildern des Objektes aus einer Vielzahl von verschiedenen Ebenen in z-Richtung des Objektes vor. Jedes dieser Bilder in dem Bildstapel enthält Bereiche scharfer Bildstrukturen mit hoher Detailschärfe und Bereiche, die bei der Aufnahme außerhalb der Fokusebene lagen und daher unscharf und ohne hohe Detailschärfe im Bild vorliegen. Damit kann ein Bild als eine Menge von Teilbildbereichen mit unterschiedlicher, insbesondere hoher Detailschärfe und niedriger Detailschärfe aufgefasst werden. Mit Hilfe bildanalytischer Verfahren werden nun aus jedem Bild des Bildstapels die Teilbildbereiche extrahiert, die in hoher Detailschärfe vorliegen. Für jedes Bild des Bildstapels wird damit ein Ergebnisbild ermittelt, das nunmehr jeweils lediglich die Bildbereiche hoher Schärfe aufweist. Diese Ergebnisbilder werden anschließend zu einem neuen, nun detailscharfen dreidimensionalen Gesamtbild zusammengefügt. Damit entsteht ein neues, vollständiges detailscharfes dreidimensionales Mikroskopbild des Objektes.

Da die Abstände und die absoluten Positionen der z-Ebenen bekannt sind, in denen die Bilder des Bildstapels aufgenommen wurden, lässt sich das so erzeugte dreidimensionale Mikroskopbild des Objektes auch quantitativ auswerten. Zum Aufnehmen der einzelnen Bilder des Bildstapels in den unterschiedlichen z-Ebenen wurde bislang der Abstand zwischen dem Objektiv und dem Objekt dadurch verändert, dass die Mikroskoptischhöhe, also der Auflagetisch des Objektes mechanisch verstellt wurde. Die hohe Tischmasse und die damit verbundene Trägheit des Gesamtsystems bildet jedoch eine Grenze für die Geschwindigkeit, mit der die einzelnen Bildstapel aufgenommen werden. Denn die Trägheit des Systems führt dazu, dass eine relativ lange Zeit benötigt wird, um das Objekt in die verschiedenen z-Ebenen in den Fokus des Objektives zu bewegen.

Aufgabe der vorliegenden Erfindung ist es daher, ein Verfahren zur Untersuchung eines Objektes vorzuschlagen, mit dem es möglich ist, das Objekt unter Verwendung konventioneller Lichtmikroskope schnell und tiefenscharf zu rekonstruieren.

Diese Aufgabe wird durch ein Verfahren mit den Merkmalen gemäß Anspruch 1 gelöst.

Mit dem Einsatz einer piezogesteuerten Einrichtung zur Einstellung des Abstandes zwischen dem Objektiv und dem Objekt ist es nun möglich, sehr genau und schnell unterschiedliche z-Ebenen des Objektes in den Fokusbereich des Objektives zu verschieben. Damit wird die Möglichkeit, eine Serie von Einzelbildern in den unterschiedlichen z-Ebenen des Objektes aufzunehmen wesentlich beschleunigt. Damit wird auch für die lichtmikroskopische Untersuchung von Objekten die Möglichkeit eröffnet, eine schnelle 3D-Rekonstruktion von mikroskopischen Oberflächen durchzuführen. Somit können in unterschiedlichen Objekten auch schnelle Vorgänge dreidimensional und tiefenscharf erfasst werden. Gleichzeitig bleibt gewährleistet, dass das Objekt bei der Untersuchung schonend behandelt wird.

Da für die vorgeschlagene Untersuchung des Objektes ein Objektiv verwendet wird und das Objekt üblicherweise auf einem Objekttisch liegt, ist es erforderlich, unterschiedliche z-Ebenen des Objektes in den Fokusbereich des Objektives zu verschieben. Erfindungsgemäß bestehen hierbei nun grundsätzlich mehrere Möglichkeiten, die gewünschte z-Ebene des Objektes in den Fokusbereich des Objektives zu verschieben. Es ist möglich, ein piezo-gesteuertes Objektiv zu verwenden. Dabei wird das Objektiv selbst mit einem Piezoaktor versehen, der mit Hilfe einer geeigneten Steuereinheit so angesteuert werden kann, dass er eine Verschiebung des Objektives und damit eine Verschiebung der Fokusebene des Objektives bewirkt.

In einer weiteren Ausgestaltung der Erfindung ist es möglich, anstelle einer Verschiebung des Objektives das Objekt auf dem Tisch bzw. den Tisch mit dem Objekt mit Hilfe eines piezogesteuerten Aktors zu verschieben. Der piezogesteuerte Aktor ist dabei mit dem Objekttisch verbunden und an eine Steuereinrichtung gekoppelt. Die Steuereinrichtung ist in der Lage, den Piezoaktor so anzusteuern, dass eine Verschiebung des Objektes auf dem Objekttisch in z-Richtung und damit die Verschiebung einer neuen z-Ebene des Objektes in den Fokusbereich des Objektives erfolgt.

In einer weiteren Ausgestaltung der Erfindung kann sowohl das Objektiv, wie auch der Objekttisch mit einem Piezoaktor versehen werden, wobei beide über eine Steuereinrichtung angesteuert werden, sodass sowohl das Objektiv wie auch der Objekttisch bzw. das auf dem Objekttisch liegende Objekt in z-Richtung verschoben werden kann. Damit kann auf einfache Weise die Weglänge erhöht werden, um die das Objekt in z-Richtung in die verschiedenen Fokusebenen verschoben werden kann. In einer weiteren Ausgestaltung der Erfindung kann sowohl das Objektiv wie auch der Objekttisch mit einem Piezoaktor versehen werden und zusätzlich der Objekttisch eine herkömmliche steuerbare Verstelleinheit (z.B. eine elektromechanische) besitzen, wobei dann alle Einheiten (Objektivpiezo, Tischpiezo und elektromechanische Tischverstelleinheit) über eine Steuereinrichtung angesteuert werden, sodass sowohl das Objektiv wie auch der Objekttisch bzw. das auf dem Objekttisch liegende Objekt in z-Richtung verschoben werden kann. Damit kann auf einfache Weise die Weglänge noch weiter erhöht werden, um die das Objekt in z-Richtung in die verschiedenen Fokusebenen verschoben werden kann.

In allen geschilderten Ausführungsbeispielen der Erfindung ist es günstig, die Einzelbilder des Bildstapels, die in den unterschiedlichen z-Ebenen aufgenommen werden, in äquidistant zueinanderliegenden z-Ebenen aufzunehmen. Dies erleichtert zum einen die Bildrekonstruktion und ermöglicht zum anderen, bei möglichst geringen z-Ebenenabständen ein äußerst genaues Erfassen des Objektes in der z-Richtung.

Ein wesentlicher Punkt des hier in Rede stehenden Verfahrens besteht darin, in den einzelnen Ebenen die scharfen von den unscharfen Bildbereichen zu trennen. Hierbei hat sich herausgestellt, dass eine wesentliche Verbesserung der Bildqualität dadurch erzeugt werden kann, wenn jedes einzelne Ebenenbild mit einem individuellen Apparateprofil rechnerisch entfaltet wird. Mit Apparateprofil sind die Abbildungseigenschaften des gesamten Aufbaus gemeint, welche mathematisch durch die Punkt-Übertragungsfunktion (englisch: point spread function, PSF) bzw. die optisch Übertragungsfunktion (englisch: optical transfer function, OTF) der gesamten Apparate-Optik beschrieben werden. Einzelheiten zu der Punkt-Übertragungsfunktion sind dem Fachmann aus einschlägigen Veröffentlichungen bekannt, beispielsweise aus: Joseph W. Goodman, "Introduction to Fourier Optics", Mc Graw Hill, New York, 1968.

Die Entfaltung bewirkt, dass die aus dem verwendeten Abbildungssystem herrührenden Abbildungsfehler aus jedem Ebenenbild entfernt werden, d.h. herausgerechnet werden können. Einzelheiten zu der mathematischen Entfaltung sind dem Fachmann ebenfalls aus Fachbüchern bekannt. Günstigerweise erfolgt die Entfaltung eines jeden Ebenenbildes noch bevor der Berechnungsprozess zum Ermitteln und Abseparieren der scharfen Bildbereiche beginnt. Damit gewinnt jede Ebene deutlich an Schärfe und die scharfen Bildbereiche jeder Ebene lassen sich leichter ermitteln. Um die Berechnungsgeschwindigkeit zu erhöhen kann die Entfaltung auch erst am Multifokusbild durchgeführt werden. Allerdings kann das Ergebnis der Entfaltung schlechter sein als bei einer Entfaltung aller Einzelbilder und anschließender Multifokus - Bildberechnung.

Mit dem erfindungsgemäßen Verfahren besteht nun die Möglichkeit, die lichtmikroskopische Begrenzung einer relativ geringen Tiefenschärfe des Bildes zu überwinden und gleichzeitig eine dreidimensionale Oberflächenrekonstruktion eines Objektes mit hoher Geschwindigkeit durch die Verwendung piezogesteuerten Aktoren zum Positionieren der Fokusebenen im Objekt durchzuführen. Somit wird die mikroskopische Bildqualität verbessert und es besteht darüber hinaus die Möglichkeit, schnelle Änderungen mikroskopischer Oberflächentopologien bildanalytisch zu erfassen und zu verwerten. Damit ist auch die Möglichkeit gegeben, Echtzeitmessungen von Oberflächenstrukturen bei gleichzeitiger Beseitigung der Begrenzung der Bildqualität durch eine zu geringe Tiefenschärfe zu erreichen.

Weitere Vorteile und vorteilhafte Ausführungsformen der Erfindung sind Gegenstand der nachfolgenden schematischen Figuren sowie deren Beschreibungen, bei deren Darstellung zugunsten der Übersichtlichkeit auf eine maßstabsgetreue Wiedergabe verzichtet wurde.

Es zeigen im Einzelnen:

Fig. 1:    einen Ausschnitt aus einer Vorrichtung zur Untersuchung eines Objektes mit einem piezogesteuerten Objektiv;

Fig. 2:    den prinzipiellen Verfahrensablauf der Untersuchung eines Objektes mit einem piezogesteuerten Objektiv;

Fig. 3:    einen Verfahrensablauf eines verbesserten Verfahrens zur Untersuchung eines Objektes mit einem piezogesteuerten Objektiv;

Fig. 4:    einen Verfahrensablauf eines weiteren verbesserten Verfahrens zur Untersuchung eines Objektes mit einem piezogesteuerten Objektiv;

Fig. 5: einen Ausschnitt aus einer Vorrichtung zur Untersuchung eines Objektes mit einem piezogesteuerten Objekttisch;

Fig. 6: den prinzipiellen Verfahrensablauf der Untersuchung eines Objektes mit einem piezogesteuerten Objekttisch;

Fig. 7: einen Verfahrensablauf eines verbesserten Verfahrens zur Untersuchung eines Objektes mit einem piezogesteuerten Objekttisch;

Fig. 8: einen Verfahrensablauf eines weiteren verbesserten Verfahrens zur der Untersuchung eines Objektes mit einem piezogesteuerten Objekttisch;

Fig. 9: einen Ausschnitt aus einer Vorrichtung zur Untersuchung eines Objektes mit einem piezogesteuerten Objekttisch und einem piezogesteuerten Objektiv;

Fig. 10: den prinzipiellen Verfahrensablauf der Untersuchung eines Objektes mit einem piezogesteuerten Objekttisch und einem piezogesteuerten Objektiv;

Fig. 11: einen Verfahrensablauf eines verbesserten Verfahrens zur Untersuchung eines Objektes mit einem piezogesteuerten Objekttisch und einem piezogesteuerten Objektiv;

Fig. 12: einen Verfahrensablauf eines weiteren verbesserten Verfahrens zur Untersuchung eines Objektes mit einem piezogesteuerten Objekttisch und einem piezogesteuerten Objektiv;

Fig. 13: einen Ausschnitt aus einer Vorrichtung zur Untersuchung eines Objektes mit einem elektromechanisch gesteuerten Objekttisch und einem piezogesteuerten Objektiv;

Fig. 14: den prinzipiellen Verfahrensablauf der Untersuchung eines Objektes mit einem elektromechanisch gesteuerten Objekttisch und einem piezogesteuerten Objektiv;

Fig. 15: einen Verfahrensablauf eines verbesserten Verfahrens zur Untersuchung eines Objektes mit einem elektromechanisch gesteuerten Objekttisch und einem piezogesteuerten Objektiv;

Fig. 16: einen Verfahrensablauf eines weiter verbesserten Verfahrens zur Untersuchung eines Objektes mit einem elektromechanisch gesteuerten Objekttisch und einem piezogesteuerten Objektiv;

Fig. 17: einen Verfahrensablauf eines weiter verbesserten Verfahrens zur Untersuchung eines Objektes mit einem elektromechanisch gesteuerten Objekttisch und einem piezogesteuerten Objektiv;

Fig. 18: einen Verfahrensablauf eines weiteren verbesserten Verfahrens zur Untersuchung eines Objektes mit einem elektromechanisch gesteuerten Objekttisch und einem piezogesteuerten Objektiv;

Fig. 19: einen Verfahrensablauf eines weiteren verbesserten Verfahrens zur Untersuchung eines Objektes mit einem elektromechanisch gesteuerten Objekttisch und einem piezogesteuerten Objektiv;

Fig. 20: einen Ausschnitt aus einer Vorrichtung zur Untersuchung eines Objektes mit einem piezo- und elektromechanisch gesteuerten Objekttisch und einem piezogesteuerten Objektiv;

Fig. 21: den prinzipiellen Verfahrensablauf der Untersuchung eines Objektes mit einem piezo- und elektromechanisch gesteuerten Objekttisch und einem piezogesteuerten Objektiv;

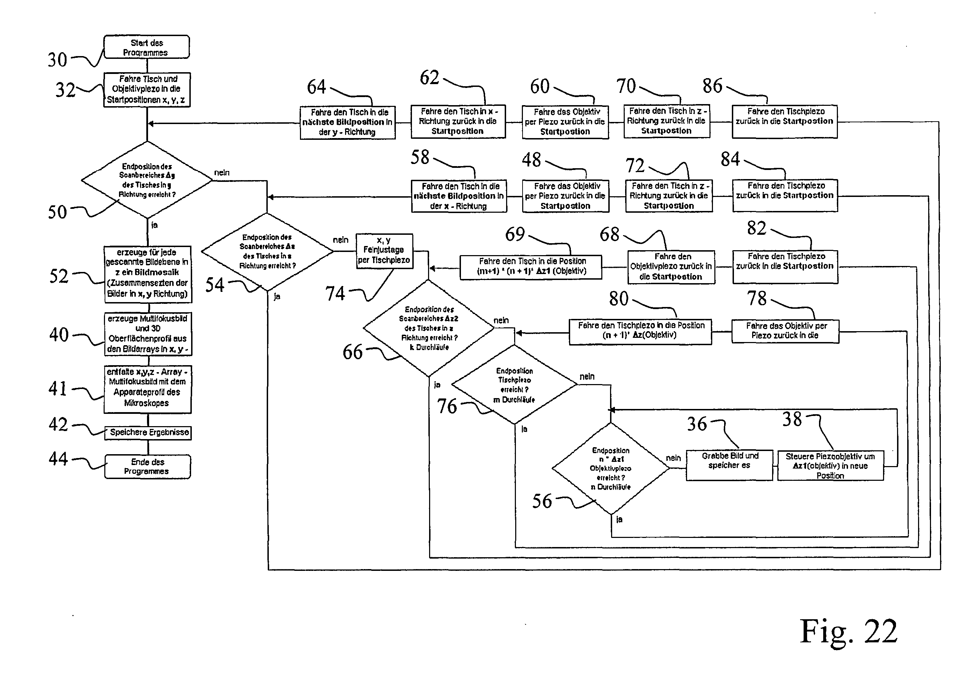

Fig. 22: einen Verfahrensablauf eines weiter verbesserten Verfahrens zur Untersuchung eines Objektes mit einem piezound elektromechanisch gesteuerten Objekttisch und einem piezogesteuerten Objektiv;

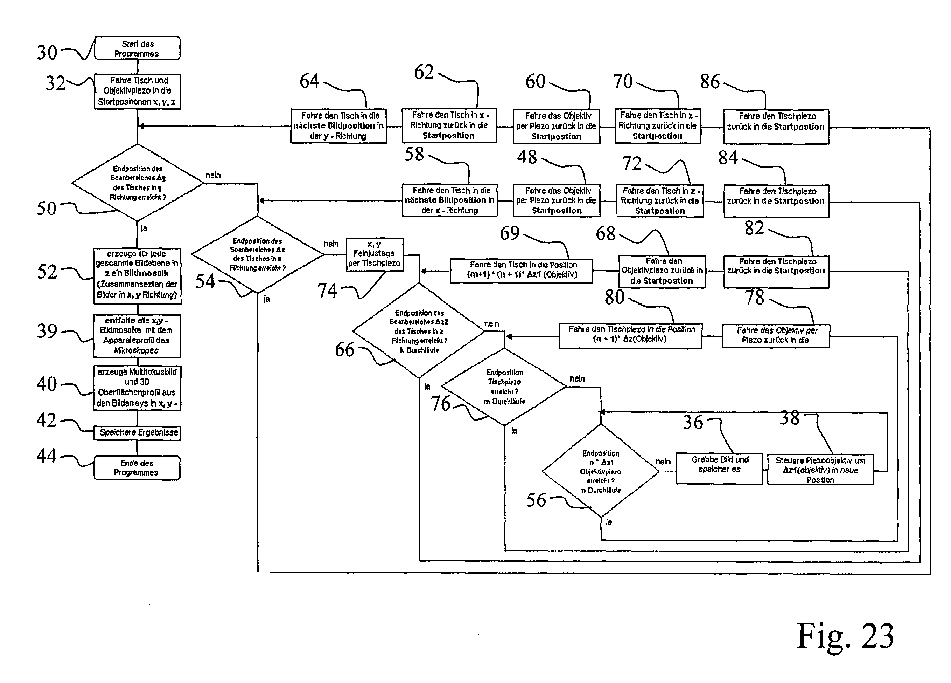

Fig. 23: einen Verfahrensablauf eines weiteren verbesserten Verfahrens zur Untersuchung eines Objektes mit einem piezo- und elektromechanisch gesteuerten Objekttisch und einem piezogesteuerten Objektiv.

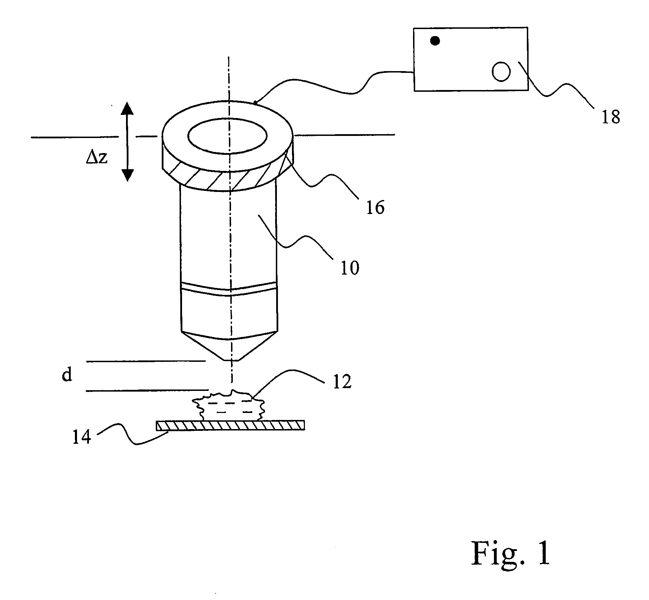

Fig. 1 zeigt in einer schematischen Darstellung einen Ausschnitt aus einer Vorrichtung zur Untersuchung eines Objektes mit einem piezogesteuerten Objektiv. Ein Objektiv 10 dient zur Untersuchung einer Objektes 12, das auf einem Objekttisch 14 aufgebracht ist. Zur Erzeugung eines tiefenscharfen Bildes und eines 3-dimensionalen Oberflächenprofils dieses Objektes wird erfindungsgemäß eine Serie von Einzelbildern aufgenommen, wobei jedes dieser Einzelbilder in verschiedenen z-Ebenen der Probe liegt. Hierzu muss der Fokus des Objektives 10 in der Probe jeweils so positioniert werden, dass er in der gewünschten Ebene liegt. Dies wird dadurch erreicht, dass der Abstand d des Objektives vom Objekt eingestellt wird. Hierzu ist am Objektiv ein Piezoaktor 16 vorgesehen, der mit einer Steuereinrichtung 18 verbunden ist. Über die Steuereinrichtung 18 kann der Piezoaktor 16 angesteuert und damit eine Verschiebung des Objektives 10 erreicht werden, die durch den Doppelpfeil angedeutet ist. Somit kann mit dem piezogesteuerten Objektiv 10 die Einstellung des Fokus innerhalb des Objektes 12 erreicht werden. Mit dem Piezoaktor kann die Verschiebung des Objektives äußerst genau und in sehr kleinen Verschiebewegen $\Delta z$ durchgeführt werden, die bevorzugt im Bereich des Auflösungsvermögens des verwendeten Beobachtungslichtes liegen.

Nachdem in jeder gewünschten z-Ebene ein Einzelbild aufgenommen worden ist, liegt die Serie von Einzelbildern zur weiteren Bildbearbeitung vor. Bevorzugt liegen die z-Ebenen zueinander äquidistant.

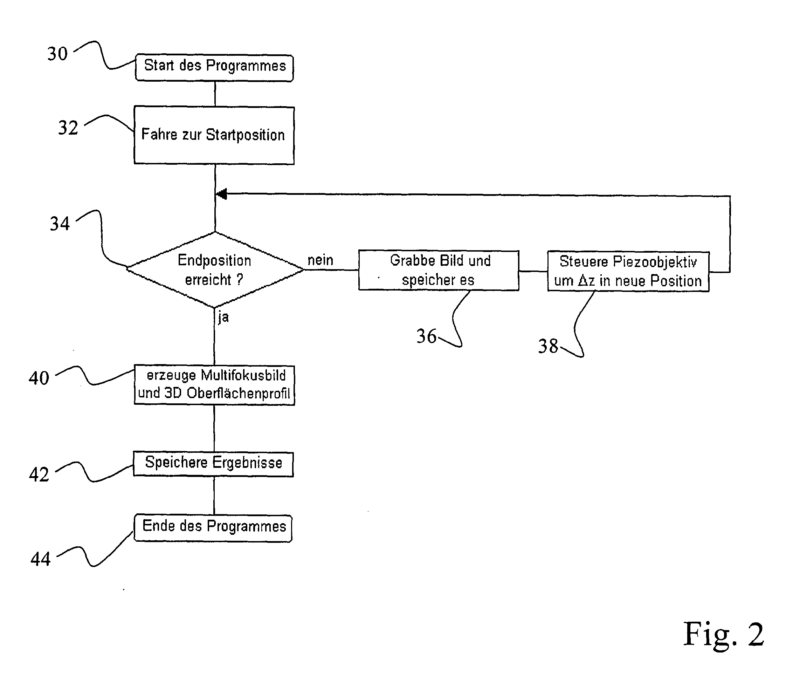

In Fig. 2 ist nun der prinzipielle Verfahrensablauf der Untersuchung eines Objektes mit einem piezogesteuerten Objektiv dargestellt, wobei das Verfahren bevorzugt über eine Softwaresteuerung verwirklicht wird. Nachdem eine grobe Voreinstellung des Objektivabstandes vom Objekt 12 vorgenommen wurde, kann der weitere Arbeitsablauf der Vorrichtung automatisch ablaufen. Hierzu wird nach dem Start 30 des Verfahrens im Schritt 32 das Objektiv 10 mittels des Piezoaktors 16 in die Startposition gefahren. Anschließend wird im Schritt 34 geprüft, ob die vom Benutzer eingegebene oder automatisch ermittelte Endposition bereits erreicht ist. Sofern dies nicht der Fall ist, wird im Schritt 36 mit Hilfe einer mit einer analogen oder digitalen Kamera, bevorzugt einer CCD-Kamera, das Bild dieser Fokusebene aufgenommen und gespeichert. Danach wird im Schritt 38 über die Steuereinrichtung 18 der Piezoaktor 16 so angesteuert, dass das Objektiv 10 so verfahren wird, dass im Objekt 12 die nächste z-Ebene, in der ein Bild aufgenommen werden soll, im Fokus des Objektives 10 liegt. Diese Schleife wird so lange wiederholt, bis im Schritt 34 festgestellt wird, dass die Endposition erreicht ist. Dann wird im Schritt 40 aus der Serie von Einzelbildern ein Multifokusbild und anschließend ein 3-dimensionales Oberflächenprofil erzeugt. Im Schritt 42 wird dieses Bild gespeichert und das Verfahren ist mit Schritt 44 beendet.

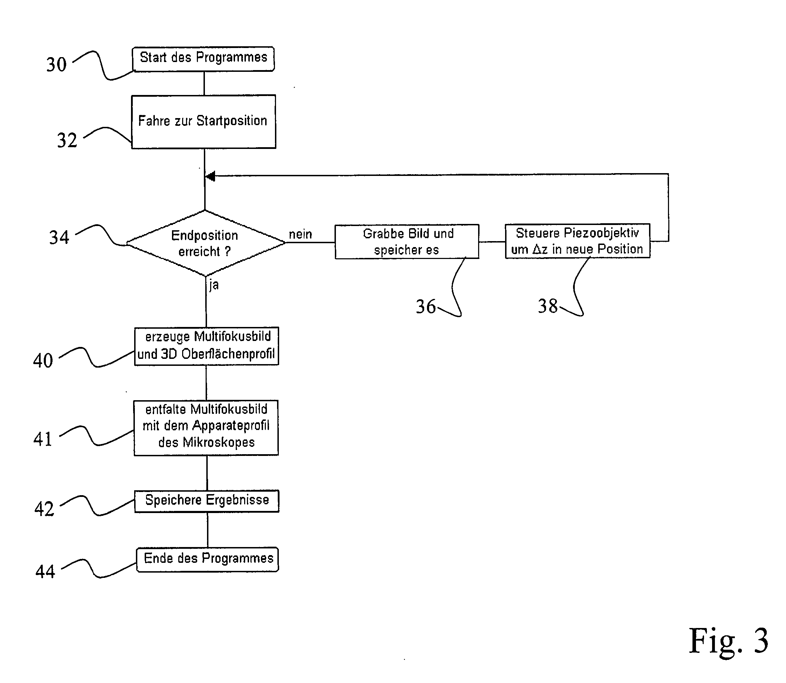

In Fig. 3 ist der Verfahrensablauf für ein Verfahren zur Untersuchung eines Objektes angegeben, bei dem die erreichte Bildqualität verbessert wird. Im Vergleich zum Verfahren gem. Fig. 2 wird zwischen die Schritte 40 und 42 ein zusätzlicher Schritt 41 eingefügt, in dem das erhaltene Multifokusbild mit dem Apparateprofil des Mikroskops entfaltet wird. Denn es hat sich herausgestellt, dass eine wesentliche Verbesserung der Bildqualität dann erzielt werden kann, wenn das erhaltene Multifokusbild mit einem individuellen Apparateprofil unter Berücksichtigung der apparate-eigenen optischen Übertragungsfunktion-Funktion (OTF= optical transfer function) oder der apparate-eigenen Punkt-Übertragungsfunktion (PSF=point spread function) entfaltet wird. Diese Entfaltung bewirkt, dass die aus dem verwendeten Abbildungssystem herrührenden unscharfen Bildpunkte aus jedem Ebenenbild entfernt werden, d.h. herausgerechnet werden können.

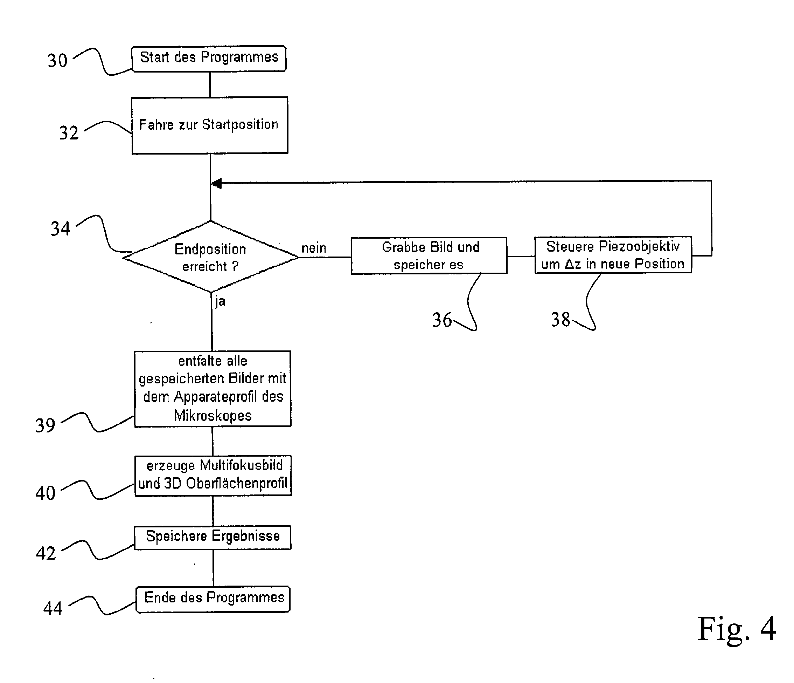

In Fig. 4 ist der Verfahrensablauf für ein Verfahren zur Untersuchung eines Objektes mit einem piezogesteuerten Objektiv und einem zusätzlichen Schritt zur nochmaligen Verbesserung der Bildqualität dargestellt. Sobald im Schritt 34 festgestellt ist, dass die Endposition erreicht ist, wird im zusätzlichen Schritt 39 jedes der gespeicherten Einzelbilder mit der jeweiligen Apparatefunktion entfaltet. Das Entfalten jedes einzelnen Bildes mit anschließender Multifokusbilderzeugung führt zu einem genaueren Multifokusbild; denn durch das Entfalten werden die von der Optik herrührenden Unschärfen bereits in jedem Einzelbild eliminiert, sodass das Gesamtbild, das eine Überlagerung der Einzelbilder darstellt, keine derartigen Unschärfen mehr aufweist.

Die in den Figuren 2 bis 4 dargestellten Verfahren unterscheiden sich somit in der Schärfe und Genauigkeit des ermittelten Multifokusbildes. Dabei ist zu berücksichtigen, dass die erhöhte Genauigkeit jeweils einen höheren Rechenaufwand erfordert. Die Erstellung des Multifokusbildes erfordert damit mehr Zeit. Dem Anwender sind somit verschiedene Möglichkeiten an die Hand gegeben, unter denen er frei wählen kann. Sofern ihm ein weniger scharfes Bild ausreicht, kann er nach der in Figur 2 beschriebenen Methode vorgehen und sehr schnell ein Bild des zu untersuchenden Objektes erhalten. Für höhere Genauigkeiten bietet sich der Verfahrensablauf nach Figur 3 an, der allerdings mehr Rechenaufwand und damit mehr Zeit zur Erstellung des Multifokusbildes nach sich zieht. Äußerst präzise und scharfe Bilder lassen sich mit Hilfe des in Figur 3 dargestellten Verfahrens erzielen. Da es dabei allerdings erforderlich ist, jedes der aufgenommenen Einzelbilder zu entfalten, ist hier auch der Rechen- und Zeitaufwand am größten.

Bei dem in Figur 4 dargestellten Verfahren kann alternativ auch so vorgegangen werden, dass das aufgenommene Bild bereits unmittelbar vor dem Speichern, also als Teil des Schrittes 36 entfaltet und erst nach dem Entfalten abgespeichert wird.

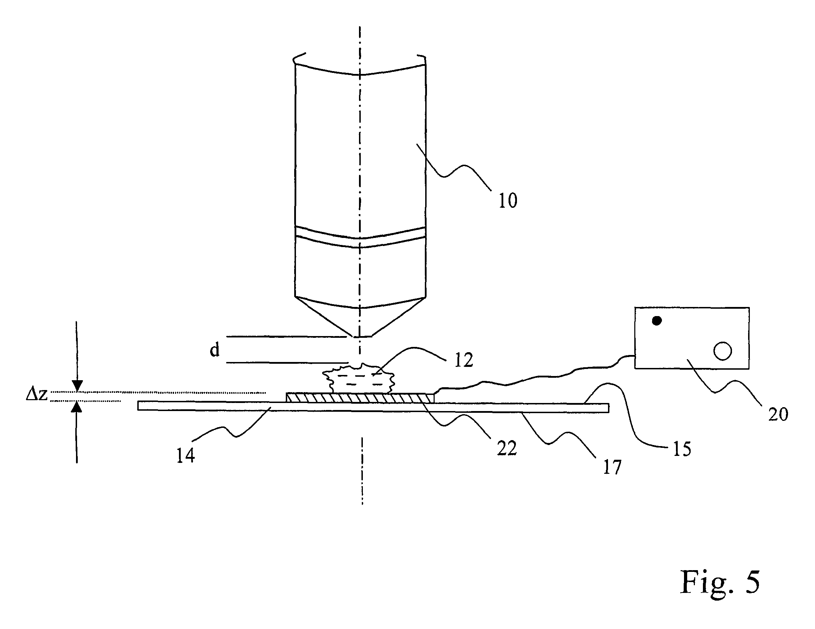

Fig. 5 zeigt eine weitere Ausgestaltung der Erfindung. Dabei ist schematisch ein Ausschnitt aus einer Vorrichtung zur Untersuchung eines Objektes 12 mit einem piezogesteuerten Objekttisch 14 dargestellt.

Das Objektiv 10 dient zur Untersuchung des Objektes 12, das auf dem Objekttisch 14 aufgebracht ist. Zur Positionierung des Fokus des Objektives 10 in der Probe 12 wird der Abstand d des Objektives vom Objekt nun dadurch eingestellt, dass am Objekttisch ein Piezoaktor 22 vorgesehen wird, der mit einer Steuereinrichtung 20 verbunden ist. Dieser Objekttisch-Piezoaktor 22 kann auf der dem Objektiv zugewandten Seite auf die Oberfläche 15 des Tisches 14 aufmontiert oder auch auf der dem Objektiv abgewandten Oberfläche 17 des Tisches 14 (nicht gezeigt) montiert werden. Die Aufmontage auf der dem Objektiv 12 zugewandten Oberfläche 15 des Tisches 14 ist allerdings bereits deshalb vorteilhaft, weil hier zur Erzeugung der z-Bewegung weniger Massen zu bewegen sind. Über die Steuereinrichtung 20 kann der Objekttisch-Piezoaktor 22 angesteuert werden und damit eine Verschiebung Objektes 10 das auf dem Piezoaktor 22 auf dem Objekttisch 14 aufgebracht ist, in z-Richtung um $\Delta z$ erreicht werden. Diese Bewegung ist durch den Doppelpfeil angedeutet. Somit kann mit dem piezogesteuerten Objekttisch 14 die Einstellung des Fokus innerhalb des Objektes 12 erreicht werden.

Nachdem in jeder gewünschten z-Ebene ein Einzelbild aufgenommen worden ist, liegt wiederum die Serie von Einzelbildern zur weiteren Bildbearbeitung vor.

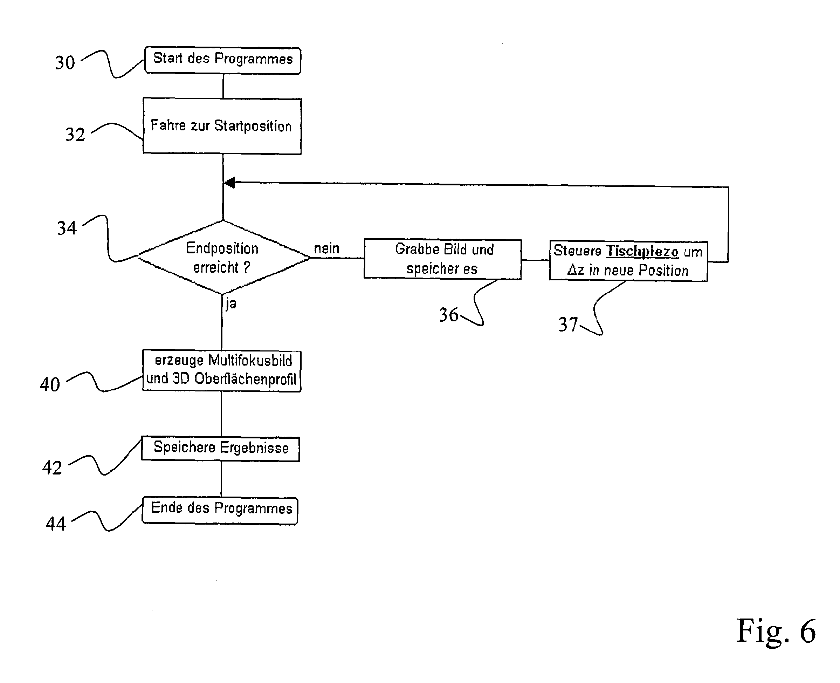

In Fig. 6 ist nun der prinzipielle Verfahrensablauf der Untersuchung eines Objektes mit einem piezogesteuerten Objekttisch dargestellt, wobei das Verfahren bevorzug über eine Softwaresteuerung verwirklicht wird. Dieses Verfahren entspricht im Wesentlichen dem bereits in Figur 2 dargestellten. Jedoch erfolgt die Einstellung der Fokusebene des Objektivs bei diesem Verfahren mit dem Verfahrensschritt 37, in dem die Piezosteuerung 19 so angesprochen wird, dass eine Dickenänderung in z-Richtung des Piezoaktors 22 um einen Betrag $\Delta z$ erreicht wird. Da das Objekt 12 auf dem Piezoaktor 22 aufgebracht wird, kann somit die Verschiebung der Fokusebene im Objekt erreicht werden.

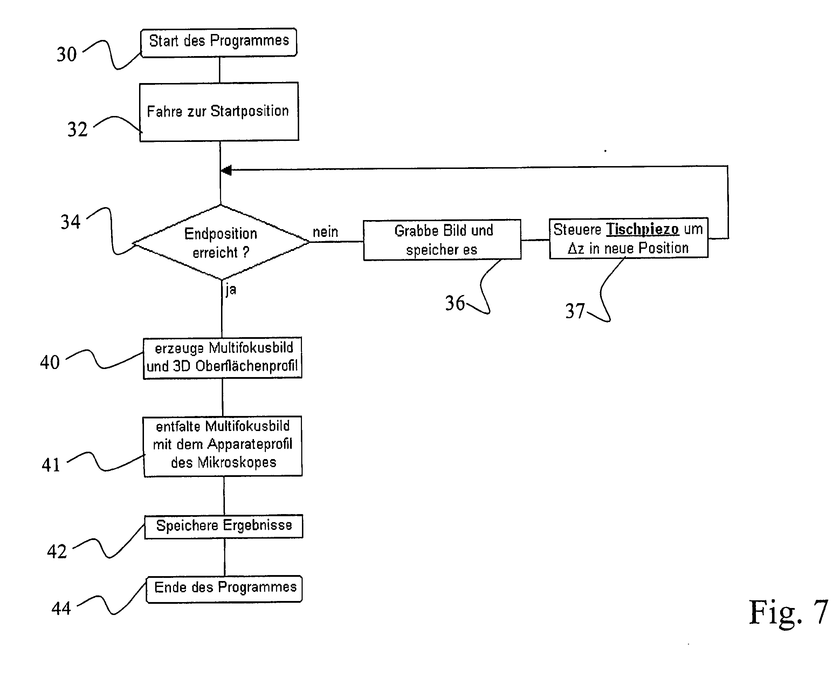

Auch durch Verwendung eines Objekttisch-Piezoaktors 22 zum Einstellen des Abstandes des Objektives von der Probe kann eine Verbesserung der Bildqualität erreicht werden. Hierzu wird entsprechend dem in Fig. 3 beschriebenen Verfahren über das zusätzliche Einfügen des Schrittes 41, das Multifokusbild mit der Apparatefunktion entfaltet. Dieses Verfahren ist in Fig. 7 dargestellt.

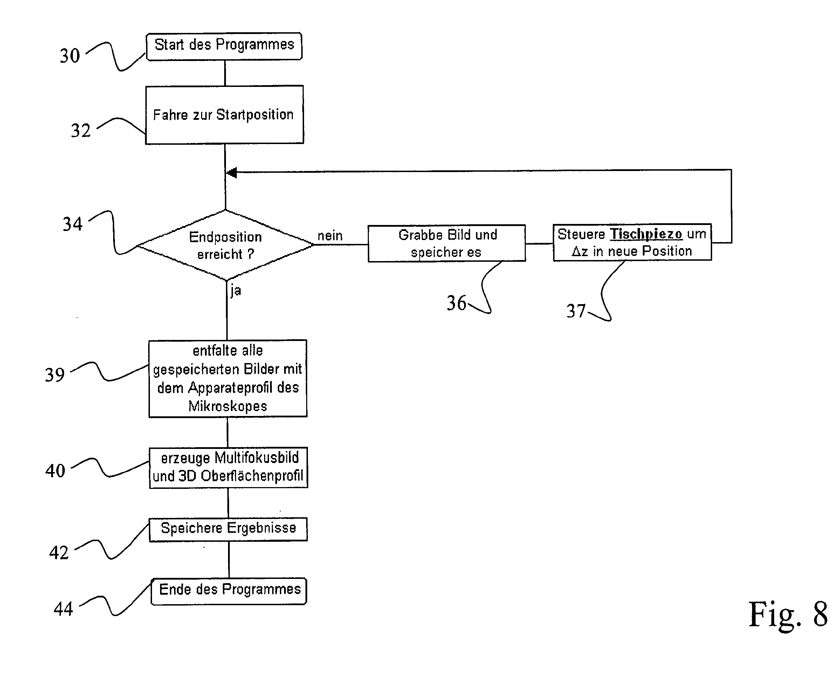

In Fig. 8 ist letztendlich noch die weitere Verbesserung durch Entfalten der Einzelbilder im Schritt 39 dargestellt, die entsprechend dem im Verfahren gemäß Fig. 4 auch beim Einsatz eines Objekttisch-Piezoaktors mit den bereits beschriebenen Vorteilen verwendet werden kann.

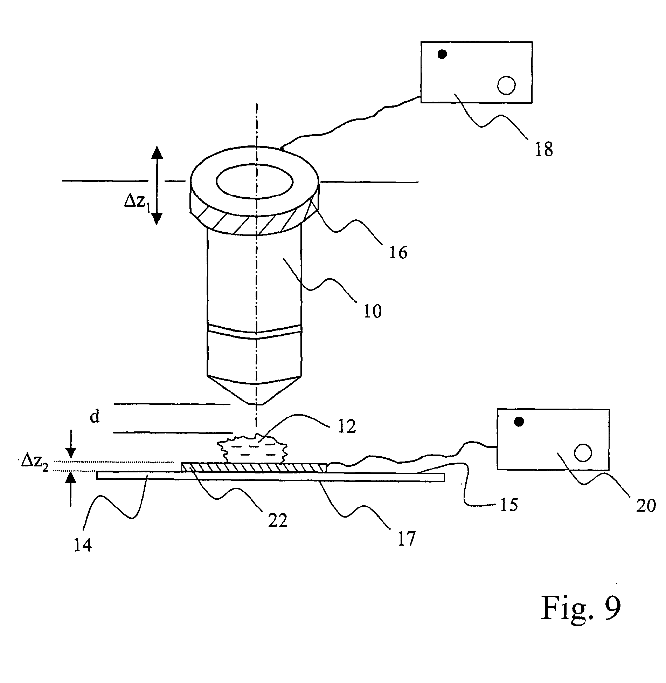

Fig. 9 zeigt eine weitere Ausgestaltung der Erfindung. Dabei ist schematisch ein Ausschnitt aus einer Vorrichtung zur Untersuchung eines Objektes 12 mit einem piezogesteuerten Objekttisch 14 und einem piezogesteuerten Objektiv 10 dargestellt. In dieser Ausführungsform der Erfindung ist am Objektiv 10 ein Objektiv-Piezoaktor 16 vorgesehen, der mit der Steuerung 18 verbunden ist. Weiterhin ist am Objekttisch 14 ein Objekttisch-Piezoaktor 22 vorgesehen, der über eine Steuereinrichtung 20 angesteuert werden kann. Wie im Zusammenhang mit Fig. 5 bereits beschrieben, kann der Objekttisch-Piezoaktor sowohl auf der dem Objektiv zugewandten Seite der Oberfläche 15 des Tisches 14 aufmontiert oder auch auf der dem Objektiv abgewandten Oberfläche 17 des Tisches 14 (nicht gezeigt) montiert werden. Wegen der üblicherweise kleinen Maximalverstellwege, die mit den Piezoaktoren erreicht werden können, bietet diese Ausführungsform die Möglichkeit, einen wesentlich größeren z-Bereich des Objektes 12 höchstauflösend zu scannen, da sowohl der Objektiv-Piezoaktor 16 um $\Delta z_1$ wie auch der Objekttisch-Piezoaktor 22 um $\Delta z_2$ verschoben werden kann.

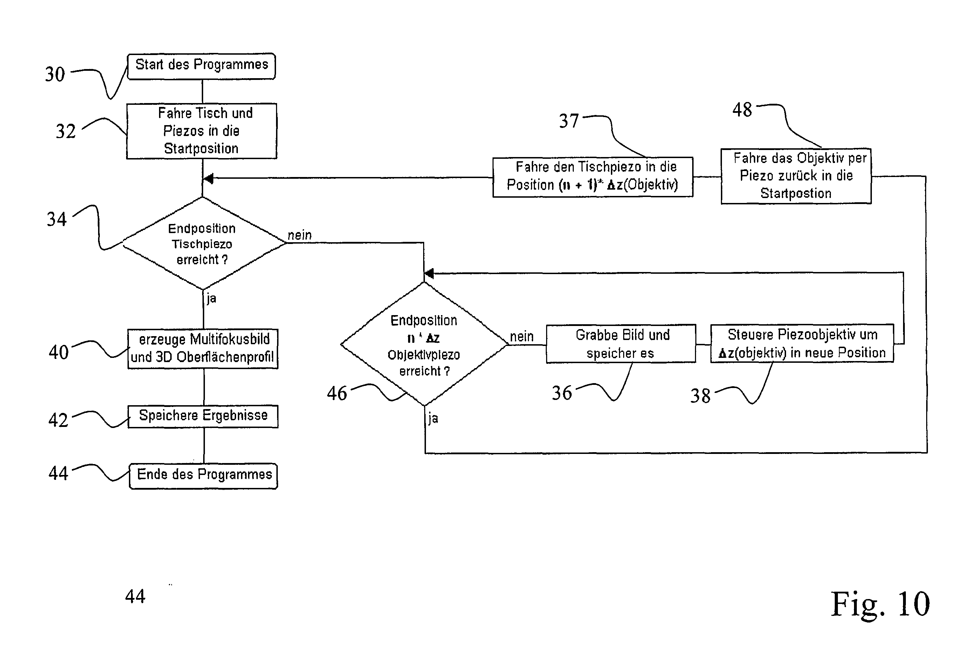

Mit Hilfe dieser beiden Piezoaktoren lassen sich nun eine Reihe von Verfahrensweisen verwirklichen, von denen eine in Fig. 10 beispielhaft gezeigt ist. Nachdem eine grobe Voreinstellung des Objektivabstandes vom Objekt vorgenommen wurde, kann der weitere Arbeitsablauf der Vorrichtung automatisch ablaufen. Hierzu werden nach dem Start 30 des Verfahrens im Schritt 32 das Objektiv 10, mittels des Objektiv-Piezoaktors sowie der Objektiv-Piezoaktor in die Startposition gefahren. Anschließend wird im Schritt 34 geprüft, ob die vom Benutzer eingegebene oder automatisch ermittelte Endposition des Tischpiezos bereits erreicht ist. Sofern dies nicht der Fall ist, wird im Schritt 46 überprüft, ob die vom Benutzer eingegebene oder berechnete Endposition des Objektiv-Piezoaktors erreicht ist. Wird im Schritt 46 festgestellt, dass die Endposition des Objektiv-Piezoaktors noch nicht erreicht ist, wird im Schritt 36 mit Hilfe einer mit einer analogen oder digitalen Kamera, bevorzugt einer CCD-Kamera, das Bild dieser Fokusebene aufgenommen. Danach wird im Schritt 38 über die Steuereinrichtung 18 der Objektiv-Piezoaktor 16 so angesteuert, dass das Objektiv 10 so verfahren wird, dass im Objekt 12 die nächste z-Ebene, in der ein Bild aufgenommen werden soll, im Fokus des Objektivs 10 liegt. Diese Schleife wird so lange wiederholt, bis im Schritt 34 festgestellt wird, dass die Endposition des Tisches erreicht ist. In dieser Steuerschleife wird demnach das Objektiv durch den Objektiv-Piezoaktor in n Schritten mit jeweils einer Schrittweite von $\Delta z_1$ in verschiedene Abstände vom Objekt gesteuert. Ist das Objektiv in seiner Endposition angekommen, so hat es einen Gesamtweg von $n * \Delta z_1 = N$ zurückgelegt.

Wird im Schritt 46 festgestellt, dass die Endposition des Objektivs erreicht ist, so wird im Schritt 48 das Objektiv mit Hilfe des Objektiv-Piezoaktors in seine Startposition zurückgefahren und dann der Objektivtisch-Piezoaktor mit der Steuereinheit 20 so angesteuert, dass er um den Wert der vorherigen Objektivgesamtauslenkung nämlich $\Delta z_2 = N + \Delta z_1$ verschoben wird. Nun wiederholt sich die Steuerschleife des Objektives und es wird erneut über einen Gesamtweg von $n * \Delta z_1 = N$ schrittweise verschoben. Ist seine maximale Auslenkposition erreicht, so kehrt das Objektiv wiederum zurück in seine Startposition und der Tisch wird per Objekttisch-Piezoaktor um den Weg der neuerlichen Objektivgesamtbewegung verschoben, nämlich $\Delta z_2 = N + \Delta z_1$ (relativ zur aktuellen Tischposition).

Durch Wiederholen dieser Steuerfolge Objektivbewegung - Tischbewegung ist es möglich, trotz der kleinen maximalen Verstellwege der Piezos einen großen Bereich der Probe zu untersuchen.

Sobald erkannt wird, dass auch der Objektivtisch an seiner Endposition angekommen ist, wird im Schritt 40 aus der Serie der so gewonnenen Einzelbilder ein Multifokusbild und anschließend ein 3-dimensionales Oberflächenprofil erzeugt. Im Schritt 42 wird dieses Bild gespeichert und das Verfahren ist mit Schritt 44 beendet.

Die beschriebene Verfahrensweise kann exemplarisch anhand der in der folgenden Tabelle gegebenen Angaben für eine Objektiv- und Tischsteuerfolge für n(Objektiv) = 3 und m(Tisch) = 3 nachvollzogen werden.

| Objektiv-Piezo Verschiebung | Tischpiezo Verschiebung (absolut) | Verschiebung gesamt | n | m | Action |
|---|---|---|---|---|---|
| 0 | 0 | $0*\Delta z_1$ | 0 | 0 | Bildaufnahme |
| $\Delta z_1$ | 0 | $1*\Delta z_1$ | 1 | 0 | Bildaufnahme |
| $\Delta z_1$ | 0 | $2*\Delta z_1$ | 2 | 0 | Bildaufnahme |
| $\Delta z_1$ | 0 | $3*\Delta z_1$ | 3 | 0 | Bildaufnahme |
| $-3*\Delta z_1$ | $-\Delta z_2 = 3*\Delta z_1 + \Delta z_1 = 4*\Delta z_1$ | $4*\Delta z_1$ | 0 | 1 | Bildaufnahme |
| $\Delta z_1$ | 0 | $5*\Delta z_1$ | 1 | 1 | Bildaufnahme |
| $\Delta z_1$ | 0 | $6*\Delta z_1$ | 2 | 1 | Bildaufnahme |
| $\Delta z_1$ | 0 | $7*\Delta z_1$ | 3 | 1 | Bildaufnahme |
| $-3*\Delta z_1$ | $-\Delta z_2 = 7*\Delta z_1 + \Delta z_1 = 8*\Delta z_1$ | $8*\Delta z_1$ | 0 | 2 | Bildaufnahme |
| $\Delta z_1$ | 0 | $9*\Delta z_1$ | 1 | 2 | Bildaufnahme |
| $\Delta z_1$ | 0 | $10*\Delta z_1$ | 2 | 2 | Bildaufnahme |
| $\Delta z_1$ | 0 | $11*\Delta z_1$ | 3 | 2 | Bildaufnahme |
| $-3*\Delta z_1$ | $-\Delta z_2 = 11*\Delta z_1 + \Delta z_1 = 12*\Delta z_1$ | $12*\Delta z_1$ | 0 | 3 | Bildaufnahme |
| $\Delta z_1$ | 0 | $13*\Delta z_1$ | 1 | 3 | Bildaufnahme |
| $\Delta z_1$ | 0 | $14*\Delta z_1$ | 2 | 3 | Bildaufnahme |
| $\Delta z_1$ | 0 | $15*\Delta z_1$ | 3 | 3 | Bildaufnahme |

Wie ersichtlich wird, kann man durch eine gezielte alternierende Bewegungsabfolge von Objektiv 10 und Tisch 14 mittels einer piezogesteuerten Verstelleinrichtung am Objektiv und am Tisch einen wesentlich größeren Scanbereich mit hoher Auflösung überdecken.

Insgesamt ergibt sich ein Gesamtabstand, der mit zwei Piezos (einer am Objektiv und einer am Objekt (Tisch)) überstrichen werden kann, zu

$$\Delta z(Gesamt) = \Delta z_1 - (m + 1) * (n + 1) * \Delta z_1 \ [\mu m]$$

wobei

m = Anzahl der Schritte des Tisch/Objekt Piezo Steuersystems

n = Anzahl der Schritte des Objektiv Piezo Systems

$\Delta z_1$ = Schrittabstand des Objektivpiezos (z.B. 0,5 $\mu$m)

ist.

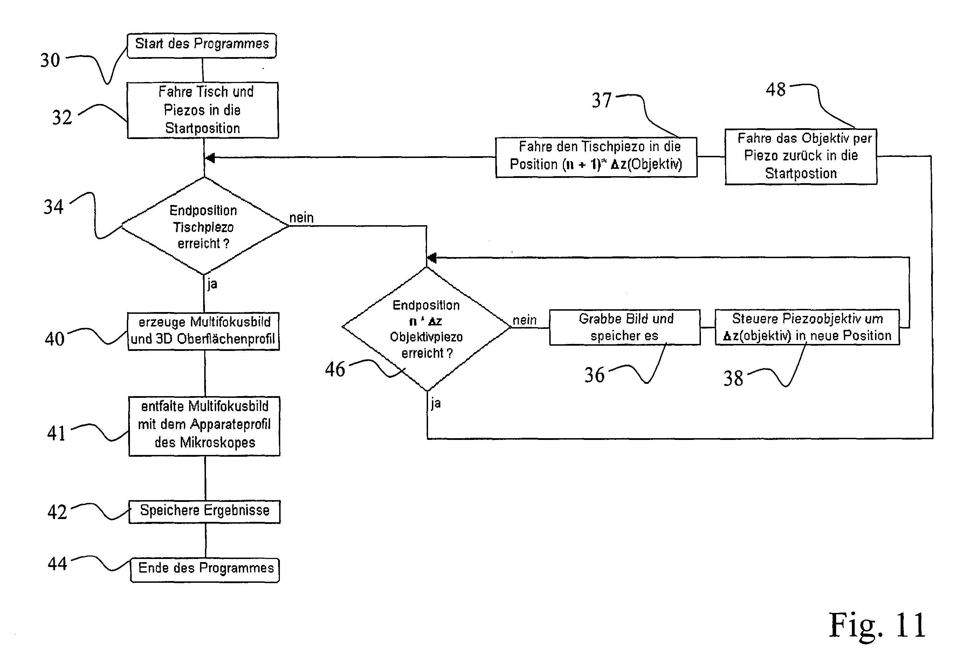

Auch durch Verwendung eines Objekttisch-Piezoaktors und eines Objektiv-Piezoaktors zum Einstellen des Abstandes des Objektivs von der Probe, kann eine Verbesserung der Bildqualität erreicht werden. Hierzu wird entsprechend dem in Fig. 3 beschriebenen Verfahren über das zusätzliche Einfügen des Schrittes 41, das Multifokusbild mit der Apparatefunktion entfaltet. Dieses Verfahren ist in Fig. 11 dargestellt.

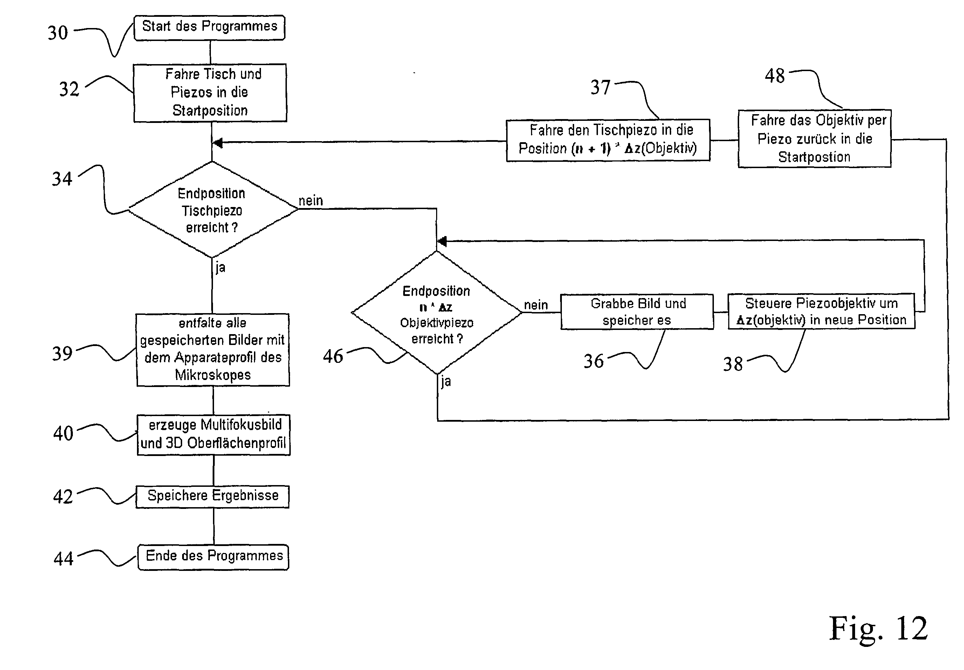

In Fig. 12 ist letztendlich noch die weitere Verbesserung durch Entfalten der Einzelbilder im Schritt 39 dargestellt, die entsprechend dem im Verfahren gemäß Fig. 4 auch beim Einsatz eines Objekttisch-Piezoaktors mit den bereits beschriebenen Vorteilen verwendet werden kann.

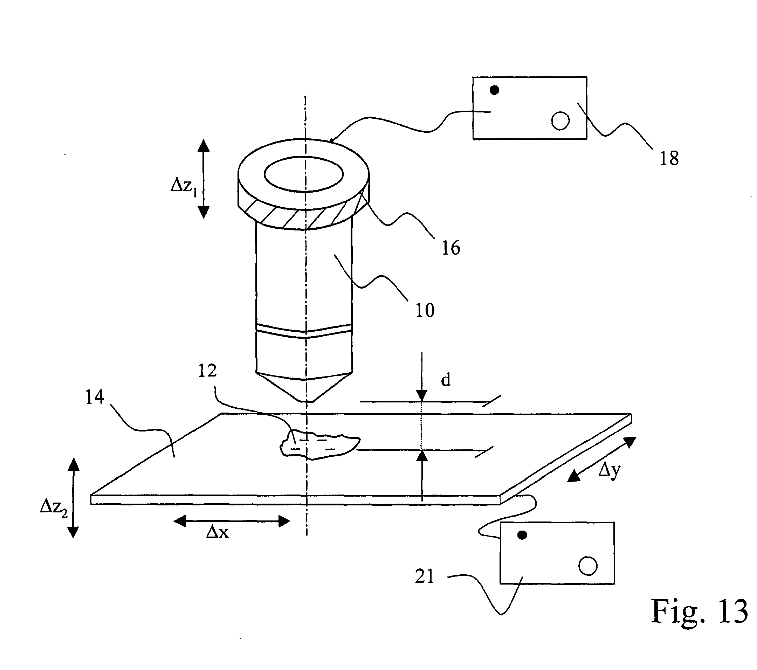

In einer weiteren Ausgestaltung der Erfindung ist in Fig. 13 schematisch eine Vorrichtung zur Untersuchung eines Objektes mit einem piezogesteuerten Objektiv in Kombination mit einem elektromechanisch gesteuerten Objekttisch dargestellt. Ein Objektiv 10 dient zur Untersuchung einer Objektes 12, das auf einem Objekttisch 14 aufgebracht ist. Um die Serie von Einzelbildern aufnehmen zu können, ist am Objektiv 10 ein Objektiv-Piezoaktor 16 vorgesehen, der von einer Steuereinheit 18 angesteuert werden kann. Der Objekttisch 14 lässt sich in alle drei Raumrichtungen jeweils in Schritten $\Delta x$, $\Delta y$, und $\Delta z_2$ verschieben, wobei diese Verschiebung durch ein Steuermodul 21 gesteuert wird. Das Steuermodul lässt sich vorzugsweise an einen Computer anschließen. Mit dieser Kombination der verschiebbaren Komponenten ist es nun möglich, auch größere Objekte zu untersuchen. Denn durch die Möglichkeit, den Tisch in der x,y-Ebene zu verschieben, können in einer einzigen z-Ebene Teilbilder in unterschiedlichen x,y-Positionen mit einer Kamera aufgenommen werden. Diese Teilbilder lassen sich dann mit einer Bildverarbeitungssoftware wieder zu einem einzigen Ebenenbild, dem sogenannten Bildmosaik, zusammensetzen, das in seiner Größe den sonst möglichen Bildaufnahmebereich um ein mehrfaches übersteigen kann. Darüber hinaus wird über den elektromechanisch auch in z-Richtung verschiebbaren Tisch 14 der mögliche Scanbereich deutlich erweitert; denn es können nun Fokusebenen eingestellt werden, die von einer Verschiebung $\Delta z_2$ des Tisches in z-Richtung und von einer Verschiebung $\Delta z_1$ des piezogesteuerten Objektivs herrühren.

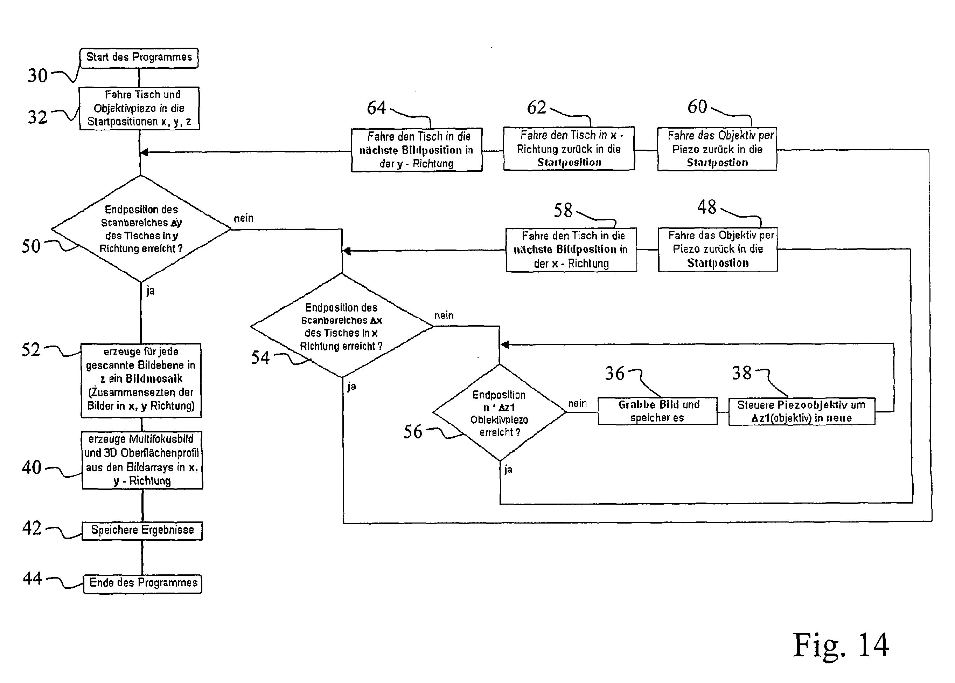

In Fig. 14 ist anhand eines Flussdiagramms der prinzipielle Verfahrensablauf der Untersuchung eines Objektes 10 mit einem elektromechanisch gesteuerten Objekttisch 14 und einem piezogesteuerten Objektiv 12 dargestellt. Nach dem Start 30 des Verfahrens und einer groben Voreinstellung des Objektivabstandes vom Objekt, kann der weitere Ablauf der Verfahrensschritte in der Vorrichtung bevorzugt vollautomatisch ablaufen. Hierzu werden zunächst der Objekttisch 14 und das Objektiv in eine Startposition gefahren. Dies wird vorteilhafterweise mittels des Piezo- und Tischsteuerungssystem (18, 21) über einen Computer durchgeführt.

In drei Steuerschleifen wird nun der Tisch 14 schrittweise über einen definierten x-y-z-Bereich bewegt. Die erste Steuerschleife ist über die Abfrage 50 definiert, in der geprüft wird, ob der Tisch 14 die Endposition in y-Richtung erreicht hat. Die zweite Steuerschleife ist über die Abfrage 54 definiert, in der geprüft wird, ob der Tisch 14 die Endposition in x-Richtung erreicht hat. Die dritte Steuerschleifen ist über die Abfrage 56 definiert, in der geprüft wird, ob das Objektiv seine Endposition erreicht hat. Befindet sich der Tisch 14 innerhalb manuell oder automatisch eingelernter x-y-Grenzen so wird der Tisch durch die Programmschleife um jeweils ein Bildfeld schrittweise weiterbewegt. Wie bei einem Schachbrettmuster wird so ein vorgegebener Scanbereich feldweise abgefahren.

In jeder neu angefahrenen x-y-Position des Tisches wird nun ein Bildstapel in z-Richtung aufgenommen.

Man erreicht dies in der dritten Steuerschleife, in der im Schritt 36 das Bild aufgenommen und anschließend die neue Fokusebene über die Verschiebung des das Objektivs 10 im Schritt 38 um den Wert $\Delta z_1$ verändert wird. Die Bilder werden in Schritt 36 mit einer analogen oder digitalen Kamera aufgezeichnet und zwischengespeichert. In n Schritten wird so die Fokusebene durch das Objekt 12 geführt und der gewünschte Bildstapel wird aufgenommen.

Nachdem ein Fokusbildstapel aufgezeichnet wurde wird das Objektiv im Schritt 48 in seine z- Startposition zurückgeführt. Im Schritt 58 wird der Objekttisch 14 um ein Bildfeld in der x-y-Ebene weitergesteuert und ein weiterer Fokusbildstapel wird nach obigem Verfahren mit dem Piezoobjektiv aufgezeichnet.

Nachdem alle Bilder so aufgenommen und gespeichert wurden, wird in Schritt 52 für jede der Fokusebenen, bevorzugt automatisch, ein Mosaikbild erstellt. Dieses Mosaikbild entsteht durch das Aneinandersetzen der in einer Fokusebene aufgezeichneten Bilder, also der Bilder, die in einer Fokusebene innerhalb eines vordefinierten x-y-Bereiches aufgezeichnet wurden. Die Mosaikbilder werden durch bekannte Verfahren wie bildüberlappende Zusammensetzungsverfahren (Autokorrelation) oder touchierende Zusammensetzverfahren erstellt. Da die Mosaikbilder für alle Fokusebenen erzeugt werden, entsteht ein Mosaikbildstapel, der alle Bilder der Fokusebenen repräsentiert.

Durch die möglichen kleinen Auslenkungen des Objektiv-Piezoaktors sind sehr kleine Abstände zwischen den einzelnen Fokusebenen erreichbar. Diese Eigenschaft erlaubt es, auch mit hochauflösenden Objektiven, d. h. mit Objektiven kleiner Schärfentiefe zu arbeiten und sehr feine topologische Details einer mikroskopischen Objektes sichtbar zu machen.

Im Schritt 40 entsteht dann durch das Zusammensetzen aller Bildmosaike, d. h. also vieler Einzelbilder, in x-y-Richtung ein, sowohl in z-Richtung vollständig scharfes Bild als auch in x-y-Richtung, höchstaufgelöstes Bild.

Im 3-dimensionalen Raum kann die Auflösung als sogenannte Voxelauflösung definiert werden. Ein Voxel ist dabei ein Volumenelement, das Pixel in 3 Raumrichtungen aufweist. Bei einer Voxelauflösung von z.B. 1 $\mu$m Kantenlänge eines Bildpixels entsteht somit in x, y, z eine Auflösung von 25400 dpi, was im Rahmen dieser Darstellungen als "höchstauflösend" angesehen werden soll.

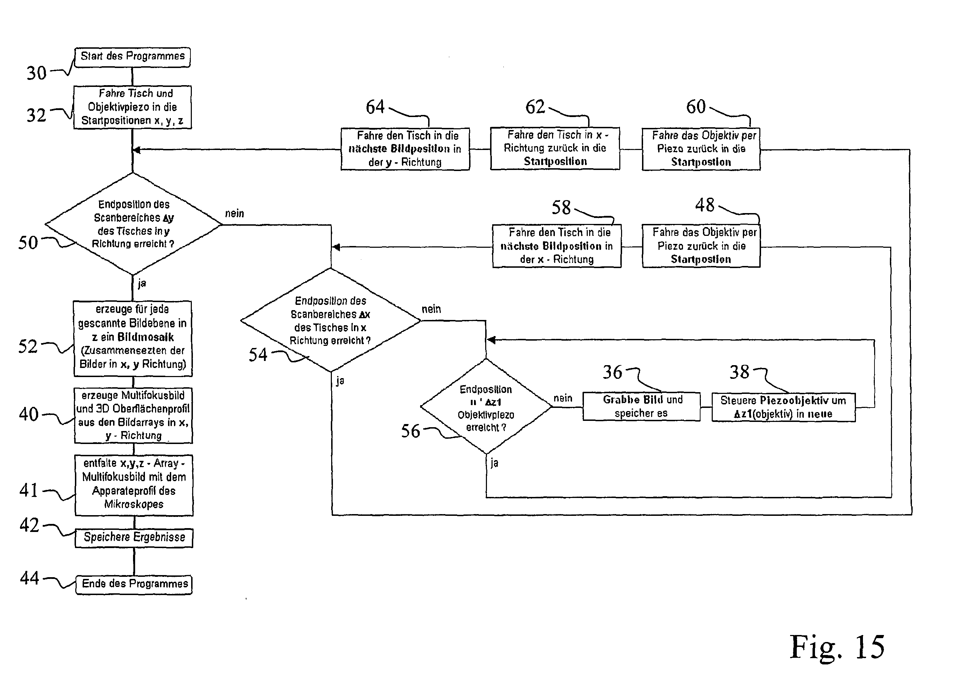

Wie in Fig. 15 gezeigt, kann nach dem Erzeugen des Multifokusbildes auch bei diesem Verfahren eine Entfaltung des Multifokusbildes mit dem Apparateprofil des Aufnahmesystems in Schritt 41 erfolgen, um die Bildschärfe in z-Richtung weiter zu verbessern.

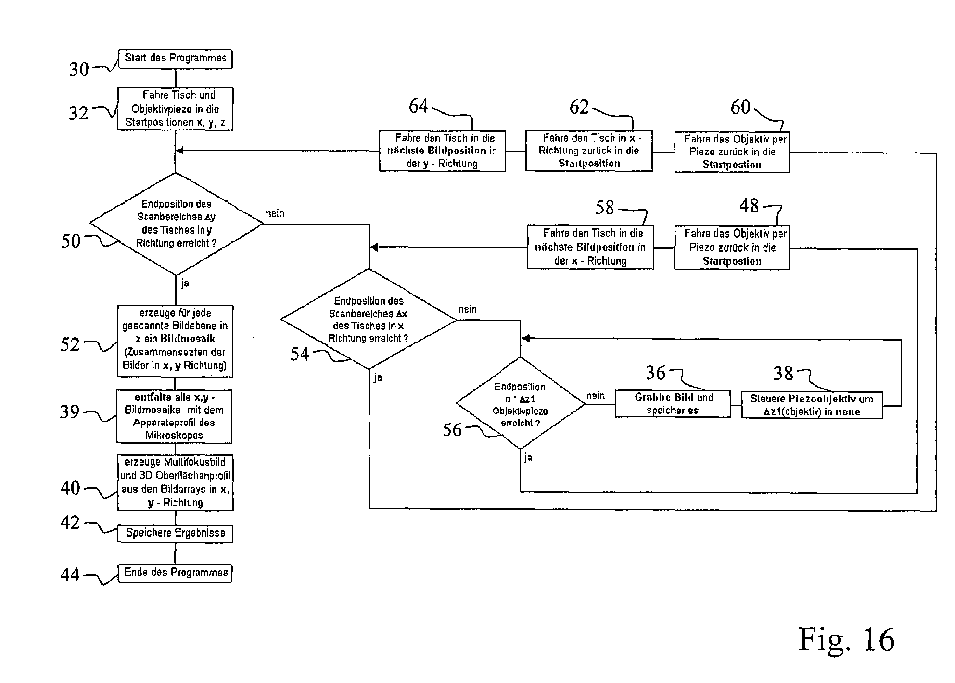

Ebenso ist es möglich, wie in Fig. 16 gezeigt, bereits vor dem Erzeugen des Multifokusbildes in Schritt 40 alle x-y-Mosaikbilder mit dem Apparateprofil des Aufnahmesystems in Schritt 39 zu entfalten. Dieses Verfahren ist, wie bereits gesagt, zwar zeitintensiver, führt aber zu einem nochmals im Hinblick auf die Schärfe des Bildes verbesserten Multifokusbild.

Eine Entfaltung der Mosaikeinzelbilder entsprechend dem in Fig. 16 beschriebenem Verfahren mit anschließender Multifokusbilderzeugung führt demnach zu einem genaueren Multifokus-Mosaikbild. Allerdings ist der Rechenaufwand erheblich, da jedes Mosaikbild des Stapels entfaltet werden muss.

Demgegenüber kann eine Entfaltung des bereits erstellten Multifokusbildes, entsprechend dem in Fig. 15 dargestellten Verfahren, aus den Original- Mosaikbilddaten (nicht entfaltete Mosaikbilder) wesentlich schneller berechnet werden. Die schnellste Berechnung erfolgt bei Weglassen einer Entfaltung der Originalmosaikbilder wie im Verfahren nach Figur 14 beschrieben. Durch die direkte Berechnung eines Multifokusbildes aus den zuvor erstellten Mosaikbildern erreicht man die höchste Geschwindigkeit der hier vorgestellten Ausführungsvarianten. Welche dieser Verfahrensvarianten gewählt wird, kann der Anwender anhand des von ihm gewünschten Ergebnisses frei wählen.

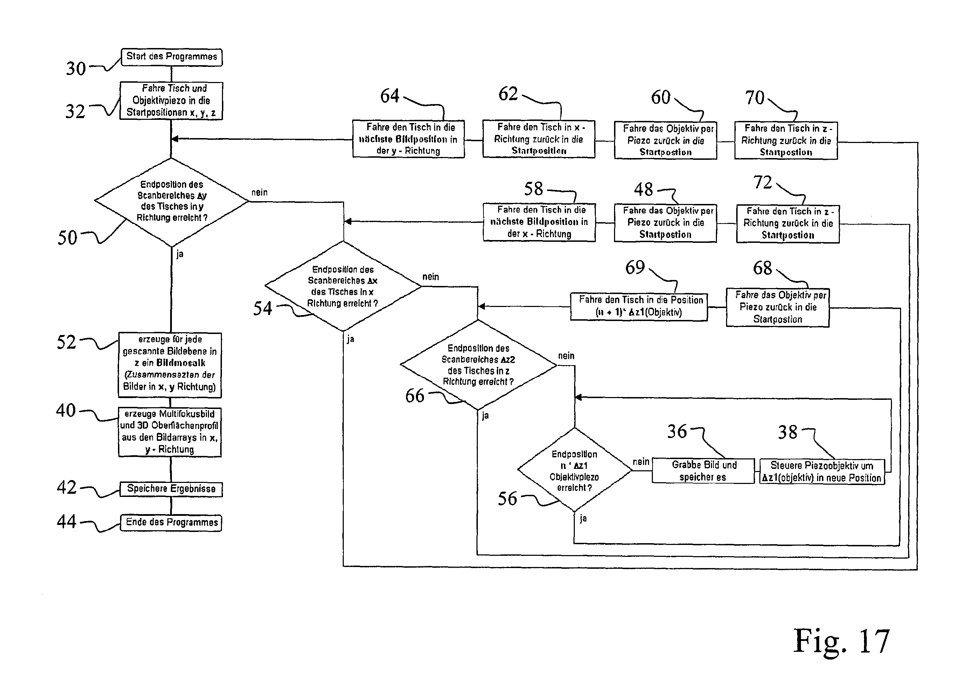

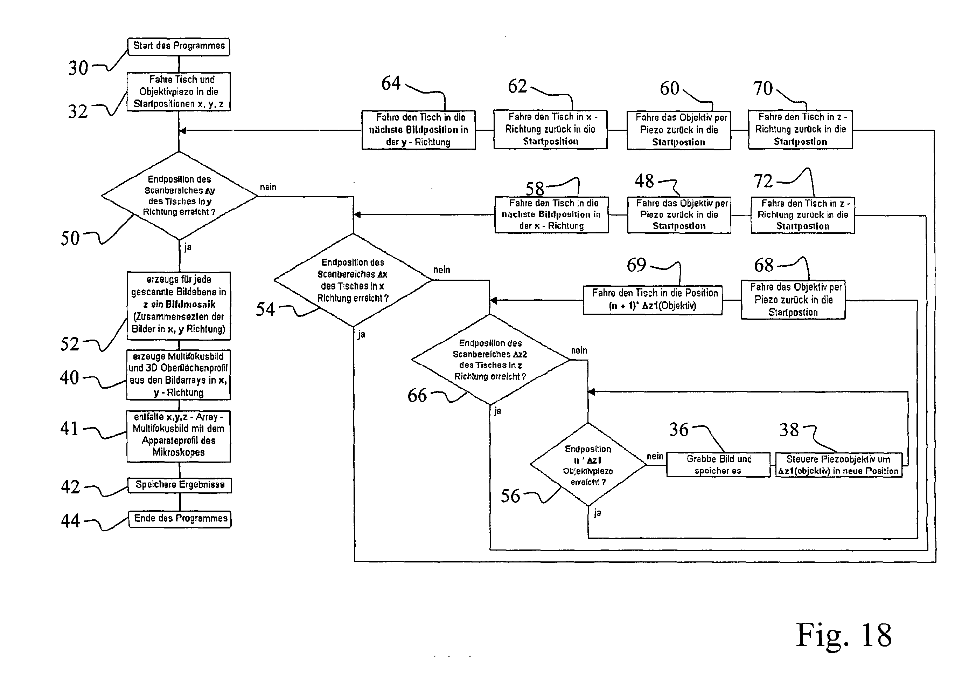

Beim Einsatz der in Fig. 13 beschriebenen Vorrichtung mit einem elektromechanisch verstellbaren Tisch 14 kann die Auflösung in z-Richtung noch weiter erhöht werden. Hierzu erfolgt die Einstellung des Abstandes des Objektives 10 von dem Objekt 12 aus einer geeigneten Kombination der $\Delta z_1$ des Objektives 10 und $\Delta z_2$ des Tisches 14. In den Fig. 17-19 ist dieser Verfahrensablauf jeweils für ein Verfahren ohne Entfaltung (Fig. 17), ein Verfahren mit Entfaltung des Multifokusbildes (Fig. 18) und ein Verfahren mit Entfaltung der Einzelbilder (Fi. 19) gezeigt.

Alle Verfahren zeichnen sich nun dadurch aus, dass in Schritt 66 zusätzlich geprüft wird, ob die Endposition des Scanbereiches $\Delta z_2$ des Tisches 14 erreicht ist. Entsprechend ist dann auch der zusätzliche Schritt 69 erforderlich, in dem der Objekttisch 14 in eine neue Position gefahren wird. Außerdem ist in den übrigen Schleifen das Zurückfahren des Tisches in seine Startposition erforderlich, was in den Schritten 70 und 72 durchgeführt wird. Bei dieser Verfahrensweise können also ein tiefenscharfes Bild und ein 3-dimensionales Oberflächenprofil dieses Bildes durch gleichzeitige Verwendung eines normalen Objekttisches in x-y-z-Richtung und eines piezogesteuerten Objektives in z-Richtung erzeugt werden. Hiermit kann bei höchster Auflösung in z-Richtung ein wesentlich größerer z-Bereich erfasst werden.

In Fig. 17 ist die prinzipielle Verfahrensweise anhand eines Ablaufplanes dargestellt. Nachdem eine grobe Voreinstellung des Abstandes des Objektives 10 vom Objekt 12 durchgeführt worden ist, können die weiteren Verfahrensschritte automatisch durchgeführt werden. Das Objekt 10 und der elektromechanisch steuerbare Objektträgertisch 14 werden mittels der Piezo-Steuerungseinrichtung 18 und des Tischsteuerungssystems 21 bevorzugt über einen Computer in eine Startposition gefahren. In drei Steuerschleifen, die durch die Abfrageschritte 50, 54 und 66 definiert sind, wird nun der Tisch 14 schrittweise über einen definierten x-y-z-Bereich bewegt. Die erste Steuerschleife wird durch die Abfrage 50 ausgelöst und prüft jeweils die Tischposition in x-y-Richtung.

Befindet sich der Tisch innerhalb manuell oder automatisch eingelernter x-y-Grenzen, so wird der Tisch 14 durch die Programmschleife um jeweils ein Bildfeld schrittweise weiterbewegt. Wie bei einem Schachbrettmuster wird so ein vorgegebener Abtastbereich feldweise abgefahren. In jeder neu angefahrenen x-y-Position des Tisches wird nun ein Bildstapel in z-Richtung aufgenommen. Dies wird durch die Steuerschleife durchgeführt, die im Schritt 56 prüft, ob die Endposition des Verstellweges des Objektiv-Piezoaktors erreicht ist. Solange dieser nicht erreicht ist, wird im Schritt 36 ein Bild aufgenommen, gespeichert und im Schritt 38 die Position des Objektives über den Objektiv-Piezoaktor um $\Delta z_1$ verändert. Dieses Verfahren kann anhand des folgenden Beispiels verdeutlicht werden:

Nach dem Start des Verfahrens wird in der durch den Schritt 56 definierten Steuerschleife nun das Objektiv durch den Objektiv-Piezoaktor in $\Delta z_1$ Schritten in verschiedene Abstände vom Objekt gesteuert. Ist das Objektiv in seiner Endposition angekommen so wird es einen Gesamtweg von n * $\Delta z_1$ = N zurückgelegt haben. Nun wird das Objektiv im Schritt 68 über den Objektiv-Piezoaktor zurück in seine Startposition gesteuert. Ferner wird der Tisch 14 um den Wert der vorherigen Objektivgesamtauslenkung - $\Delta z_2$ = N + $\Delta z_1$ verschoben.

Nun wiederholt sich die Steuerschleife und es wird erneut über einen Gesamtweg von n * $\Delta z_1$ = N schrittweise verschoben. Ist seine maximale Auslenkposition erreicht, so kehrt das Objektiv 10 wiederum zurück in seine Startposition und der Tisch 14 wird um den Weg der neuerlichen Objektivgesamtbewegung um - $\Delta z_2$ = N + $\Delta z_1$ relativ zur aktuellen Tischposition verschoben.

Durch Wiederholen dieser Objektivbewegung und Tischbewegung kann ein wesentlich größerer Bereich des Objektes höchstauflösend - da Piezos sehr kleine Verschiebungen realisieren können - abgescannt werden. In jeder durch die Objektivverschiebung $\Delta z_1$ erreichten Fokusebene wird ein Bild mit einer analogen oder digitalen Kamera aufgezeichnet und zunächst gespeichert (im RAM, auf der Festplatte etc.).

Konkret ergibt sich beispielsweise für die folgende Objektiv- und Tischsteuerfolge für n(Objektiv) = 3 und m (Tisch) = 3 ein Verfahrensablauf, wie er in der folgenden Tabelle dargestellt ist.

| Objektivpiezo Positionsverschiebung | Tischpiezo Positionsverschiebung (absolut) | Verschiebung gesamt | n | m | Action |
|---|---|---|---|---|---|
| 0 | 0 | $0 * \Delta z_1$ | 0 | 0 | Bildaufnahme |
| $\Delta z_1$ | 0 | $1 * \Delta z_1$ | 1 | 0 | Bildaufnahme |
| $\Delta z_1$ | 0 | $2 * \Delta z_1$ | 2 | 0 | Bildaufnahme |
| $\Delta z_1$ | 0 | $3 * \Delta z_1$ | 3 | 0 | Bildaufnahme |
| $- 3 * \Delta z_1$ | $- \Delta z_2 = 3 * \Delta z_1 + \Delta z_1 = 4 * \Delta z_1$ | $4 * \Delta z_1$ | 0 | 1 | Bildaufnahme |
| $\Delta z_1$ | 0 | $5 * \Delta z_1$ | 1 | 1 | Bildaufnahme |
| $\Delta z_1$ | 0 | $6 * \Delta z_1$ | 2 | 1 | Bildaufnahme |
| $\Delta z_1$ | 0 | $7 * \Delta z_1$ | 3 | 1 | Bildaufnahme |
| $- 3 * \Delta z_1$ | $- \Delta z_2 = 7 * \Delta z_1 + A z_1 = 8 * \Delta z_1$ | $8 * \Delta z_1$ | 0 | 2 | Bildaufnahme |
| $\Delta z_1$ | 0 | $9 * \Delta z_1$ | 1 | 2 | Bildaufnahme |
| $\Delta z_1$ | 0 | $10 * \Delta z_1$ | 2 | 2 | Bildaufnahme |
| $\Delta z_1$ | 0 | $11 * \Delta z_1$ | 3 | 2 | Bildaufnahme |
| $-3 * \Delta z_1$ | $- \Delta z_2 = 11 * \Delta z_1 + \Delta z_1 = 12 * \Delta z_1$ | $12 * \Delta z_1$ | 0 | 3 | Bildaufnahme |
| $\Delta z_1$ | 0 | $13 * \Delta z_1$ | 1 | 3 | Bildaufnahme |
| $\Delta z_1$ | 0 | $14 * \Delta z_1$ | 2 | 3 | Bildaufnahme |
| $\Delta z_1$ | 0 | $15 * \Delta z_1$ | 3 | 3 | Bildaufnahme |

Wie ersichtlich, kann durch eine gezielte alternierende Bewegungsabfolge von Objektiv 10 und Tisch 14 mittels einer piezogesteuerten Verstelleinrichtung 16, 18 am Objektiv und der Positionssteuerung 21 des Tisches 14 ein wesentlich größeren Scanbereich mit hoher Auflösung überdeckt werden. Daraus ergibt sich ein Gesamtabstand, der mit diesem Verfahren überstrichen werden kann zu:

$$\Delta z(Gesamt) = \Delta z_1 - (m + 1) * (n + 1) * \Delta z_1 \ [\mu m]$$

dabei ist

m = Anzahl der Schritte des Tisch/Objekt Steuersystems (elektromechanisch)
n = Anzahl der Schritte des Objektiv Piezo Systems
$\Delta z1$ = Schrittabstand des Objektivpiezos (z.B. 1 $\mu$m)

Nachdem ein Fokusbildstapel nach besagtem Zusammenspiel zwischen Tisch- und Objektivbewegung aufgezeichnet wurde, kehrt das Piezoobjektiv 10 im Schritt in seine z-Startposition zurück. Der Tisch 14 wird um ein Bildfeld in der x-y-Ebene weitergesteuert und ein weiterer Fokusbildstapel wird nach obigem Verfahren mit dem Piezoobjektiv aufgezeichnet.

Sobald alle Bilder eingescannt wurden, wird für jede gescannte z-Ebene im Schritt 52 das Mosaikbild erzeugt, wobei dieser Schritt bevorzugt von einem speziellen Programm zunächst automatisch durchgeführt wird. Auf diese Weise entsteht für jede Fokusebene ein Mosaikbild. Im Schritt 40 wird dann wieder ein Multifokusbild erzeugt.

Zur Verbesserung der Bildqualität kann wiederum, wie in Fig. 18 gezeigt, nach dem Erzeugen des Multifokusbildes auch bei diesem Verfahren eine Entfaltung des Multifokusbildes mit dem Apparateprofil des Aufnahmesystems in Schritt 41 erfolgen, um die Bildschärfe in z-Richtung weiter zu verbessern.

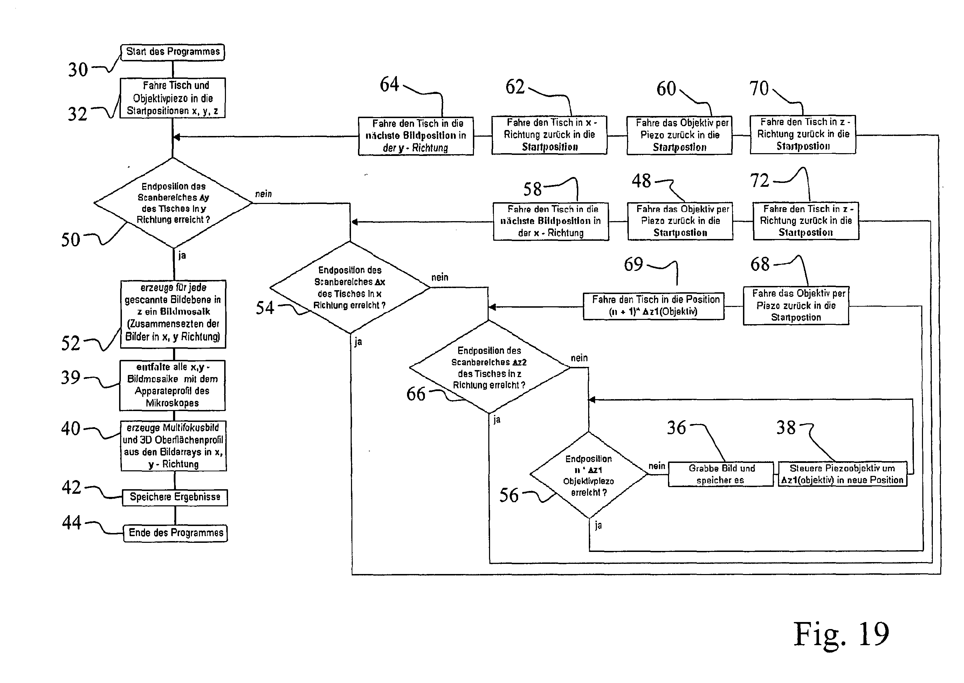

Ebenso ist es möglich, wie in Fig. 19 gezeigt, bereits vor dem Erzeugen des Multifokusbildes in Schritt 40 alle x,y-Mosaikbilder mit dem Apparateprofil des Aufnahmesystems in Schritt 39 zu entfalten. Dieses Verfahren ist, wie bereits gesagt, zwar zeitintensiver, führt aber zu einem nochmals im Hinblick auf die Schärfe des Bildes verbesserten Multifokusbild.

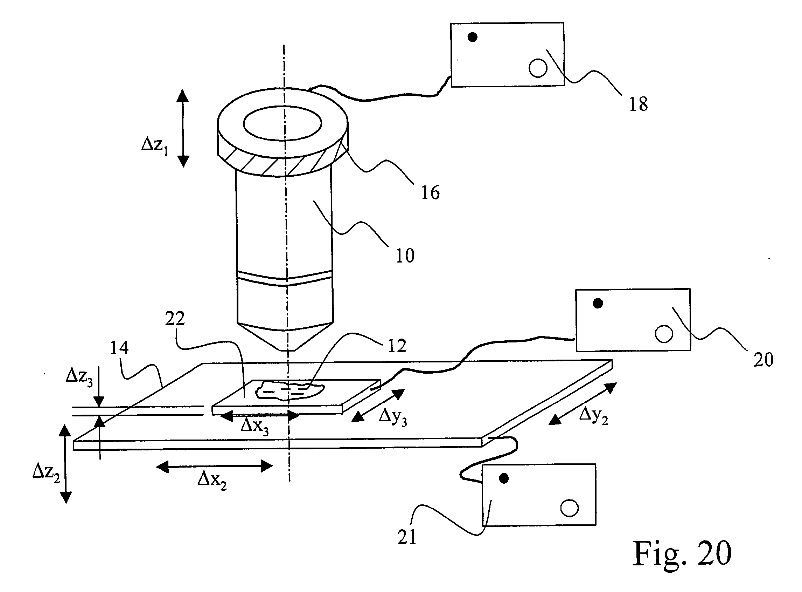

Ein einer weiteren Ausgestaltung der Erfindung wird einen Piezoaktor 16 mit einer zugehörigen Steuerung 18 am Objektiv 10 und ein Piezoaktor 22 mit einer zugehörigen Steuerung 20 am Tisch 14 angeordnet. Der Tisch 14 ist darüber hinaus mit einer elektromechanische Steuerung gekoppelt, um eine Bewegung des Objekttisches in x-, y-, und z-Richtung bereitzustellen. In einer schematischen Darstellung ist diese Konstellation in Figur 20 gezeigt.

Somit sind nun für die Einstellung des Abstandes des Objektives 10 vom Objekt 12, also für die gesamt mögliche z - Verschiebung folgende drei Verstellglieder vorhanden :

| 1. | elektromechanisch Tisch: | $\Delta z_2$ |
|---|---|---|
| 2. | Tisch-Piezoaktor | $\Delta z_3$ |
| 3. | Objektiv-Piezoaktor | $\Delta z_1$ |

Für die Verstellung des Objekttische in x- und y-Richtung sind zwei Verstellglieder vorhanden:

| 1. | elektromechanisch Tisch | $\Delta x_2;$ | $\Delta y_2$ |
|---|---|---|---|
| 2. | Tisch-Piezoaktor | $\Delta x_3;$ | $\Delta y_3$ |

Durch die Möglichkeiten der Piezokombination kann ein Fein-Scanbereich erreicht werden, der durch den Verstellbereich definiert ist, den die beiden Piezoaktoren abdecken.

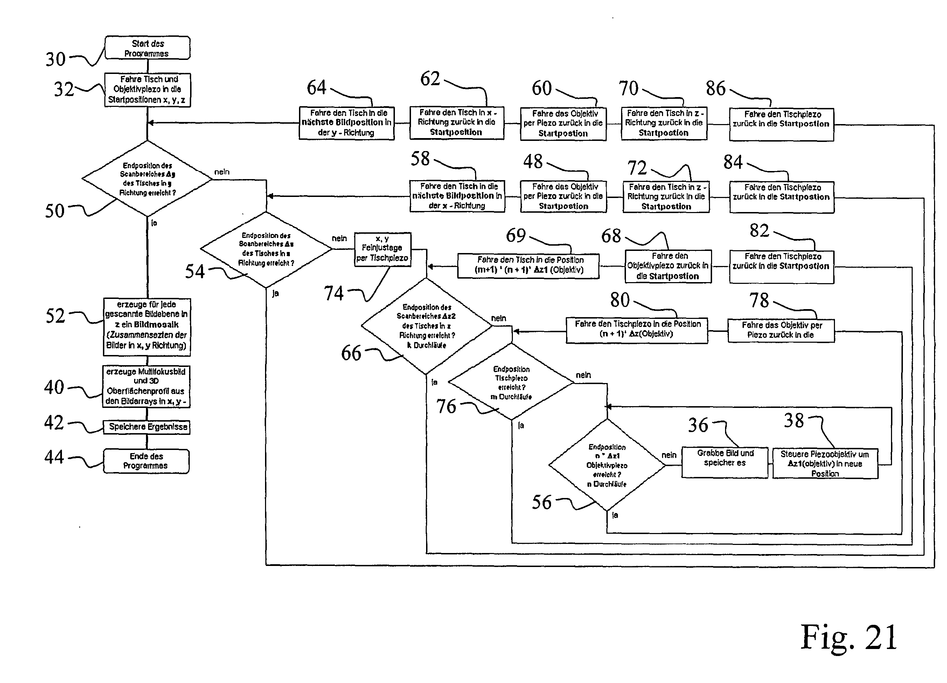

Entsprechend dem nun zusätzlich zur Einstellung des Abstandes des Objektives 10 von dem Objekt 12 zur Verfügung stehenden Verstellweges $\Delta z_3$ werden die bislang beschriebenen Verfahren um eine weitere Steuerschleife erweitert. Dieses Verfahren ist in Fig. 21 anhand eines Ablaufdiagramms dargestellt. Hierzu wird in Schritt 76 abgeprüft, ob die Endposition des Objekttisch-Piezoaktors bereits erreicht ist. Abhängig von diesem Ergebnis wird entweder in Schritt 36 das aktuelle Bild oder das Objektiv 10 und der Tischpiezo 22 um Schritt 78 und 80 in ihre neue Position gefahren. Zusätzlich werden in den Gesamtablauf auch die Schritte 82, 84 und 86 aufgenommen, in denen jeweils der Tischpiezo 22 in seine Startposition zurückgefahren wird

Grundsätzlich entspricht das Scanprinzip dem bereits im Zusammenhang mit Fig. 11 beschriebenen, bei dem ebenfalls ein Objektiv-Piezoaktor 16 und ein Tisch-Piezoaktor 22 eingesetzt werden. Hier kann ein sehr präzises, hochaufgelöstes und schnelles Erfassen der einzelnen Bildebenen zur Rekonstruktion eines 3-dimensionalen Oberflächenabbildes und eines höchstaufgelösten Bildes erfolgen. Durch den zusätzlichen Einsatz eines elektromechanischen, in den drei Raumrichtungen x, y, z verstellbaren Tisches 14 lässt sich das Verfahren gemäß Fig. 11 in vorteilhafter Weise mit dem Verfahren gemäß Fig. 17 kombinieren. Sowohl der Grob- als auch der Feinbereich lassen sich so abstimmen, dass durch ein geeignetes Bewegungsmaß des elektromagnetischen Tisches in z-Richtung ein nahtloses Aneinanderfügen der Feinscanbereiche realisiert wird. Somit erlaubt die Kombination beider Ausführungsbeispiele eine wesentliche Erhöhung des in z-Richtung verfügbaren Feinscanbereiches.

Wie in Fig. 21 schematisch dargestellt, kann nach jeder x-y-Verschiebung des elektromechanischen Mikroskoptisches 14, die exakte Wunschposition mittels des Tischpiezos 22 fein eingestellt werden. Dies gelingt durch einen in x und y geeignet wirkenden Offset der Position des Objektes12 durch den Tischpiezo 22, nachdem die neue x-y-Position des Objektes durch den elektromechanischen Tisch 14 voreingestellt wurde.

Diese erlaubt es, bei der Bildmosaikerstellung auf die Berechnung des Überlappbereiches benachbarter Bilder verzichten, da sich die einzelnen, zum Mosaik beitragenden Einzelbilder so genau anfahren lassen, dass benachbarte Bilder sich pixelgenau berühren. Somit können die Mosaikeinzelbilder im Berührungsverfahren, dem sogenannten touchè-Verfahren aneinandergesetzt werden. Dieses Verfahren zur Mosaikerstellung ist das derzeit schnellste und robusteste Verfahren, da die das Bildmosaik bestimmenden Qualitätsfaktoren ausschließlich von der genauen Positionierung des Objektes12 abhängen. Diese gelingt über eine exakte elektromechanische Positionierung des Tisches 14 und die genaue Ansteuerung des Tischpiezo 14 in x-y- und z-Richtung. Somit muss keine Bildanalyse zur Berechnung des Überlappbereiches benachbarter Bilder erfolgen. Durch Wegfall der Notwendigkeit dieses zeitaufwendigen Autokorrelationsverfahrens wird neben Robustheit und Bildinhalts - Unabhängigkeit ferner eine hohe Geschwindigkeit erreicht und es können schnell veränderliche Prozesse an mikroskopischen Oberflächen hochauflösend erfasst werden.

## Bezugszeichenliste

10  Objektiv
12  Objekt
14  Objekttisch

15   Dem Objektiv zugewandte Oberfläche des Objekttisches
16   Objektiv-Piezoaktor
17   Dem Objektiv abgewandte Oberfläche des Objekttisches
18   Piezosteuereinrichtung
20   Piezosteuereinrichtung
21   elektromechanische Verschiebesteuerung
22   Objekttisch-Piezoaktor
30   Start des Verfahrens
32   Anfahren der Startposition
34   Entscheidung "Endposition erreicht?"
36   Bild holen und speichern
37   Verschiebung des Objekttisch-Piezoaktors $\Delta z$
38   Verschiebung des Objektivs
39   Entfalten der Einzelbilder
40   Erzeugen des Multifokusbildes
41   Entfalten des Multifokusbildes
42   Ergebnis speichern
44   Ende des Verfahrens
46   Entscheidung "Endposition Objektivpiezo erreicht?"
48   fahre Objektiv in Startposition
50   Entscheidung "Endposition des Tisches in y-Richtung erreicht?"
52   Erzeuge Bildmosaik
54   Entscheidung "Endposition des Tisches in x-Richtung erreicht?"
56   Entscheidung "Objektivpiezo Entposition erreicht?"
58   fahre Tisch in nächste x-Position
60   verfahre Objektiv zurück in Startposition
62   fahre Tisch in x-Startposition zurück
64   fahre Tisch in nächste y-Position
66   Entscheidung "Endposition Tisch in z-Richtung erreicht?"
68   verfahre Objektiv zurück in Startposition
69   verfahre Tisch in nächste z-Position
70   verfahre Tisch zurück in z-Startposition
72   verfahre Tisch zurück in z-Startposition
74   Feinjustage x, y-Richtung
76   Entscheidung "Endposition Tisch in z-Richtung erreicht?"
78   verfahre Objektiv zurück in Startposition
80   verfahre Tischpiezo in die nächste z-Position
82   verfahre Tischpiezo zurück in Startposition
84   verfahre Tischpiezo zurück in Startposition
86   verfahre Tischpiezo zurück in Startposition
d    Abstand Objektiv/Objekt
$\Delta x$   Verschiebung in z-Richtung
$\Delta y$   Verschiebung in z-Richtung
$\Delta z$   Verschiebung in z-Richtung

**Patentansprüche**

1.  Verfahren zur Untersuchung eines Objektes (12), unter Verwendung eines Lichtmikroskopes, das Ebenenbilder des Objektes (12) mit scharfen und unscharfen Bildbereichen aufnimmt, mit einem Objektiv (10) und einem Objekttisch (14) zur Aufnahme des Objektes (12), der eine Verstelleinheit aufweist,
    bei dem mit einer Bildaufnahmeeinrichtung eine Serie von Ebenenbildern des Objekts (12) in verschiedenen z-Ebenen aufgenommen wird, und
    bei dem bildanalytisch die scharfen Bildanteile der Ebenenbilder zu einem Multifokusbild kombiniert werden,
    **dadurch gekennzeichnet,**
    **dass** mit einem zusätzlichen Piezoaktor (16,22), mit dem der Abstand des Objektivs (10) vom Objekt (12) verstellbar ist, vor der Aufnahme eines Ebenenbildes die jeweilige z-Ebene des Objekts (12) in den Fokusbereich des Objektivs (10) verschoben wird,

und **dass** die jeweilige z-Ebene des Objekts in den Fokusbereich des Objektivs (10) verschoben wird, indem der Verstellweg der Verstelleinheit und der Verstellweg des Piezoaktors (16,22) derart kombiniert werden, **dass**, solange eine vom Benutzer eingegebene oder automatisch ermittelte Endposition der Verstelleinheit nicht erreicht ist, der Piezoaktor (16, 22) in n Schritten mit jeweils einer Schrittweite von $\Delta Z$ bewegt wird, bis seine Endposition erreicht ist, wobei anschließend der Piezoaktor (16, 22) in seine Startposition zurückgefahren und die Verstelleinheit nur der Wert der vorherigen Gesamtbewegung des Piezoaktors (16, 22) verschoben wird.

2. Verfahren zur Untersuchung eines Objektes (12) nach Anspruch 1,
   **dadurch gekennzeichnet,**
   **dass** die Lagen der Fokusebenen des Objektives (10) im Objekt (12) für jedes Ebenenbild so eingestellt werden, dass sie zueinander äquidistant sind.

3. Verfahren nach einem der Ansprüche 1 oder 2, **dadurch gekennzeichnet,**
   **dass** nach der Aufnahme der Ebenenbilder (36) oder nach der Aufnahme der Serie der Ebenenbilder jedes der Ebenenbilder mit einer Apparatefunktion der optischen Abbildungsvorrichtung entfaltet wird.

4. Verfahren nach Anspruch 3, **dadurch gekennzeichnet,**
   **dass** das Multifokusbild in einem Schritt (41) mit einer Apparatefunktion der optischen Abbildungsvorrichtung entfaltet und somit ein Multifokusbild mit erhöhter Detailschärfe erhalten wird.

5. Verfahren nach einem der Ansprüche 1-4, **dadurch gekennzeichnet, dass** zum Einstellen des Abstandes des Objektes (12) vom Objektiv (10) ein am Objektiv angebrachter Piezoaktor (16) und ein am Objekttisch angebrachter Piezoaktor (22) von ihren jeweiligen Steuereinrichtungen (18, 20) so angesteuert werden, dass sich ihre Ausdehnung in z-Richtung ändert.

6. Verfahren nach Anspruch 5, **dadurch gekennzeichnet,**
   **dass** zur Positionierung des Objektes (12) der Objekttisch (14) mit einer elektromechanischen Verschiebeeinrichtung in x,-y,- oder z-Richtung verschoben wird.

7. Verfahren nach Anspruch 6, **dadurch gekennzeichnet,**
   **dass** in jeder Fokusebene zunächst in einem ersten Schritt (52) aus den Ebenenbildern zunächst ein Bildmosaik für diese Ebene erzeugt wird und jedes Bildmosaik in einem zweiten Schritt (40) zur Erzeugung eines Multifokusbildes verwendet wird.

8. Verfahren nach Anspruch 7, **dadurch gekennzeichnet,**
   **dass** jedes Bildmosaik vor der Erzeugung des Multifokusbildes mit der Apparatefunktion der optischen Abbildungsvorrichtung entfaltet wird.

9. Verfahren nach Anspruch 7, **dadurch gekennzeichnet,**
   **dass** das aus jedem Bildmosaik entstandene Multifokusbild mit dem Apparateprofil der optischen Abbildungsvorrichtung entfaltet und somit ein Multifokusbild mit erhöhter Detailschärfe erhalten wird.

## Claims

1. A method for examining an object (12) using a light microscope which records plane images of the object (12) comprising sharp and unsharp image regions, said microscope having an objective lens (10) and an object stage (14) for receiving the object (12), said object stage comprising an adjustment unit,
   wherein an image recording device records a series of plane images of the object (12) in different z planes, and
   wherein the sharp image portions of the plane images are combined into a multifocus image by means of image analysis,
   **characterized in that**
   the distance between the objective lens (10) and the object (12) is adjustable by an additional piezo actuator (16, 22), the respective z plane of the object (12) is moved by said piezo actuator into the focal area of the objective lens (10) prior to recording a plane image (10), and
   the respective z plane of the object is moved into the focal region of the objective lens (10) by combining the traverse of the adjustment unit and the traverse of the piezo actuator (16, 22) in such a way that, until an end position of the adjustment unit either entered by the user or determined automatically has not been reached, the piezo actuator (16, 22) is moved in n steps with individual step widths of $\Delta z$ until its end position has been reached, wherein subsequently the piezo actuator (16, 22) is moved back into its start position, and the adjusting unit is moved by the value of the prior total movement of the piezo actuator (16, 22).

2. The method for examining an object (12) according to claim 1, **characterized in that** the positions of the focal planes of the objective lens (10) in the object (12) for each plane image are adjusted in such a way that they are equidistant from each other.

3. The method according to one of claims 1 or 2, **characterized in that,** after the plane images (36) have been recorded or after the series of plane images has been recorded, each of the plane images is unfolded with an instrument function of the optical imaging device.

4. The method according to claim 3 **characterized in that**, in a step (41), the multifocus image is unfolded with an instrument function of the optical imaging device, thus yielding a multifocus image having enhanced sharpness of details.

5. The method according to one of claims 1 to 4 **characterized in that,** for purposes of adjusting the distance between the object (12) and the objective lens (10), a piezo actuator (16) arranged on the objective lens and a piezo actuator (22) arranged on the object stage are actuated by their associated control devices (18, 20) in such a way that their extension changes in the z direction.

6. The method according to claim 5 **characterized in that,** in order to position the object (12) the object stage (14) is moved in the x, y, or z-direction by an electromechanical adjustment unit.

7. The method according to claim 6, **characterized in that,** in each focal plane, in a first step (52) a image mosaic is first created for this plane from the plane images and, in a second step (40) each image mosaic is used to generate a multifocus image.

8. The method according to claim 7, **characterized in that** each image mosaic is unfolded with the instrument function of the optical imaging device before the multifocus image is generated.

9. The method according to claim 7, **characterized in that** the multifocus image created from each image mosaic is unfolded with the instrument profile of the optical imaging device, thus yielding a multifocus image having enhanced sharpness of details.

**Revendications**

1. Procédé d'examen d'un objet (12), en utilisant un microscope optique, enregistrant des images bidimensionnelles de l'objet (12) ayant des zones d'image nettes et floues, comprenant un objectif (10) et une platine porte-objet (14), destiné à l'enregistrement de l'objet (12), qui présente un bloc de réglage,
dans lequel une série d'images bidimensionnelles de l'objet (12) est enregistrée dans divers plans z avec un dispositif de prise de vue, et
dans lequel les portions d'image nettes des images bidimensionnelles sont combinées par analyse d'image pour donner une image multifocus,
**caractérisé en ce que**
le plan z respectif de l'objet (12) est déplacé dans la zone de point focal de l'objectif (10), avant l'enregistrement d'une image bidimensionnelle, grâce à un actionneur piézoélectrique supplémentaire (16, 22) avec lequel la distance de l'objectif (10) à l'objet (12) peut être réglée,
et **en ce que** le plan z respectif de l'objet est déplacé dans la zone de point focal de l'objectif (10) en combinant le trajet de réglage du bloc de réglage et le trajet de réglage de l'actionneur piézoélectrique (16, 22) de sorte que, tant qu'une position finale du bloc de réglage, déterminée de manière automatique ou indiquée par l'utilisateur, n'est pas atteinte, l'actionneur piézoélectrique (16, 22) est déplacé en n pas avec respectivement une largeur de pas de $\Delta z$, jusqu'à ce que sa position finale soit atteinte, l'actionneur piézoélectrique (16, 22) étant ramené ensuite dans sa position de départ et le bloc de réglage étant déplacé de la valeur du mouvement total précédent de l'actionneur piézoélectrique (16, 22).

2. Procédé d'examen d'un objet (12) selon la revendication 1, **caractérisé en ce que**

les positions des plans focaux de l'objectif (10) dans l'objet (12) sont ajustées pour chaque plan de sorte qu'ils soient équidistants les uns aux autres.

3. Procédé selon l'une des revendications 1 ou 2, **caractérisé en ce que**
chacune des images bidimensionnelles est développée ou deconvulsée avec une fonction d'appareil du dispositif d'imagerie optique après l'enregistrement des images bidimensionnelles (36) ou après l'enregistrement des séries d'images.

4. Procédé selon la revendication 3, **caractérisé en ce que** l'image multifocus est développée ou deconvulsée en une étape (41) avec une fonction d'appareil du dispositif d'imagerie optique et une image multifocus est ainsi obtenue avec une netteté de détail augmentée.

5. Procédé selon l'une quelconque des revendications 1 à 4, **caractérisé en ce que**, pour l'ajustement de la distance de l'objet (12) à l'objectif (10),
un actionneur piézoélectrique (16) mis en place au niveau de l'objectif et un actionneur piézoélectrique (22) mis en place au niveau de la platine porte-objet sont pilotés par leurs dispositifs de contrôle respectifs (18, 20) de telle manière que leur extension dans la direction z se modifie.

6. Procédé selon la revendication 5, **caractérisé en ce que**
la platine porte-objet (14) est déplacée par un dispositif de déplacement électromécanique en direction x, y, ou z en vue du positionnement de l'objet (12).

7. Procédé selon la revendication 6, **caractérisé en ce que**
dans chaque plan focal est générée initialement dans une première étape (52) une mosaïque d'image pour ce plan à partir des images bidimensionnelles, et chaque mosaïque d'image est utilisée dans une deuxième étape (40) pour la génération d'une image multifocus.

8. Procédé selon la revendication 7, **caractérisé en ce que**
chaque mosaïque d'image est développée ou deconvulsée avant la génération de l'image multifocus avec la fonction d'appareil du dispositif d'imagerie optique.

9. Procédé selon la revendication 7, **caractérisé en ce que**
l'image multifocus résultant de chaque mosaïque d'image est développée ou deconvulsée avec le profil d'appareil du dispositif d'imagerie optique et qu'une image multifocus est ainsi obtenue avec une netteté de détail augmentée.

Fig. 1

EP 1 436 658 B1

```
        30 ─┐        ┌─────────────────────┐
            └────────│  Start des Programmes │
                     └──────────┬──────────┘
                                │
        32 ─┐        ┌──────────┴──────────┐
            └────────│  Fahre zur Startposition │
                     └──────────┬──────────┘
                                │
                                ▼◄──────────────────────────────────────────────┐
                                                                                 │
        34 ─┐          ◇────────────◇                                            │
            └──────────│ Endposition │  nein   ┌──────────────┐  ┌──────────────────┐
                       │ erreicht ?  │────────│ Grabbe Bild und │─│ Steuere Piezoobjektiv │
                       ◇────────────◇          │  speicher es   │  │ um Δz in neue Position │
                             │ ja              └──────┬───────┘  └──────────────────┘
                                                       36          38
        40 ─┐        ┌──────────────────────┐
            └────────│ erzeuge Multifokusbild │
                     │ und 3D Oberflächenprofil │
                     └──────────┬───────────┘
                                │
        42 ─┐        ┌──────────┴──────────┐
            └────────│  Speichere Ergebnisse │
                     └──────────┬──────────┘
                                │
                     ┌──────────┴──────────┐
                     │  Ende des Programmes │
        44 ─┘        └─────────────────────┘
```

Fig. 2

Fig. 3

- 30 Start des Programmes
- 32 Fahre zur Startposition
- 34 Endposition erreicht ?
- nein
- 36 Grabbe Bild und speicher es
- 38 Steuere Piezoobjektiv um Δz in neue Position
- ja
- 40 erzeuge Multifokusbild und 3D Oberflächenprofil
- 41 entfalte Multifokusbild mit dem Apparateprofil des Mikroskopes
- 42 Speichere Ergebnisse
- 44 Ende des Programmes

18

- **30** — Start des Programmes
- **32** — Fahre zur Startposition
- **34** — Endposition erreicht? — nein / ja
- **36** — Grabbe Bild und speicher es
- **38** — Steuere Piezoobjektiv um Δz in neue Position
- **39** — entfalte alle gespeicherten Bilder mit dem Apparateprofil des Mikroskopes
- **40** — erzeuge Multifokusbild und 3D Oberflächenprofil
- **42** — Speichere Ergebnisse
- **44** — Ende des Programmes

Fig. 4

Fig. 5

EP 1 436 658 B1

EP 1 436 658 B1

Fig. 6

Fig. 7

EP 1 436 658 B1

Fig. 8

Start des Programmes — 30

Fahre zur Startposition — 32

Endposition erreicht ? — 34

nein → Grabbe Bild und speicher es — 36

Steuere Tischpiezo um Δz in neue Position — 37

ja → entfalte alle gespeicherten Bilder mit dem Apparateprofil des Mikroskopes — 39

erzeuge Multifokusbild und 3D Oberflächenprofil — 40

Speichere Ergebnisse — 42

Ende des Programmes — 44

Fig. 9

Fig. 10

Start des Programmes — 30

Fahre Tisch und Piezos in die Startposition — 32

Endposition Tischpiezo erreicht ? — 34

Fahre den Tischpiezo in die Position $(n + 1)\cdot \Delta z$(Objektiv) — 37

Fahre das Objektiv per Piezo zurück in die Startposition — 48

Steuere Piezoobjektiv um $\Delta z$(objektiv) in neue Position — 38

Grabbe Bild und speicher es — 36

Endposition $n\cdot \Delta z$ Objektivpiezo erreicht ? — 46

erzeuge Multifokusbild und 3D Oberflächenprofil — 40

Speichere Ergebnisse — 42

Ende des Programmes — 44

nein / ja

25

EP 1 436 658 B1

```
        30 ─╮        Start des Programmes

                     Fahre Tisch und                                        37 ─╮                    48 ─╮
        32 ─╮        Piezos in die
                     Startposition                      Fahre den Tischpiezo in die        Fahre das Objektiv per
                                                        Position (n + 1)* Δz(Objektiv)      Piezo zurück in die
                                                                                            Startpostion

        34 ─╮        Endposition          nein
                     Tischpiezo
                     erreicht ?

                          │ ja

        40 ─╮        erzeuge Multifokusbild        Endposition         nein    Grabbe Bild und      Steuere Piezoobjektiv um
                     und 3D Oberflächenprofil      n * Δz                      speicher es          Δz(objektiv) in neue Position
                                                   Objektivpiezo
                                                   erreicht ?              36 ─╮              38 ─╮
                                             46 ─╮
        41 ─╮        entfalte Multifokusbild            │ ja
                     mit dem Apparateprofil
                     des Mikroskopes

        42 ─╮        Speichere Ergebnisse

        44 ─╮        Ende des Programmes
```

Fig. 11

Fig. 12

30 — Start des Programmes

32 — Fahre Tisch und Piezos in die Startposition

34 — Endposition Tischpiezo erreicht ?

48 — Fahre das Objektiv per Piezo zurück in die Startposition

37 — Fahre den Tischpiezo in die Position $(n + 1) \cdot \Delta z$(Objektiv)

38 — Steuere Piezoobjektiv um $\Delta z$(objektiv) in neue Position

36 — Grabbe Bild und speicher es

46 — Endposition $n \cdot \Delta z$ Objektivpiezo erreicht ?

39 — entfalte alle gespeicherten Bilder mit dem Apparateprofil des Mikroskopes

40 — erzeuge Multifokusbild und 3D Oberflächenprofil

42 — Speichere Ergebnisse

44 — Ende des Programmes

nein / ja

Fig. 13

```
         ┌──────────────────────┐
  30 ──  │ Start des Programmes  │
         └──────────┬───────────┘
         ┌──────────┴───────────┐       ┌──────────────────┐   ┌──────────────────┐   ┌──────────────────┐
         │   Fahre Tisch und    │    64 │ Fahre den Tisch  │62 │ Fahre den Tisch  │60 │ Fahre das Objektiv│
  32 ──  │  Objektivpiezo in die│  ──── │  in die          │── │  in x -          │── │  per Piezo zurück │
         │ Startpositionen x,y,z│       │  nächste         │   │  Richtung zurück │   │  in die          │
         └──────────┬───────────┘       │  Bildposition in │   │  in die          │   │  Startpostion    │
                    │                    │  der y-Richtung  │   │  Startposition   │   │                  │
                    ↓                    └──────────────────┘   └──────────────────┘   └──────────────────┘
            ╱───────────────╲
           ╱ Endposition des ╲    nein
  50 ──   ╱  Scanbereiches Δy  ╲ ────────────────→
          ╲  des Tisches in y  ╱                         ┌──────────────────┐   ┌──────────────────┐
           ╲ Richtung erreicht?╱                      58 │ Fahre den Tisch  │48 │ Fahre das Objektiv│
            ╲───────┬───────╱                         ── │  in die nächste  │── │  per Piezo zurück │
                    │ ja                                  │  Bildposition in │   │  in die          │
                    ↓                                     │  der x-Richtung  │   │  Startpostion    │
         ┌──────────────────────┐                        └──────────────────┘   └──────────────────┘
         │  erzeuge für jede    │
  52 ──  │  gescannte Bildebene │           ╱───────────────╲
         │  in z ein Bildmosaik │          ╱ Endposition des ╲    nein
         │ (Zusammensezten der  │   54 ── ╱  Scanbereiches Δx  ╲ ───────→
         │ Bilder in x,y Richtung)│        ╲  des Tisches in x ╱
         └──────────┬───────────┘           ╲ Richtung erreicht?╱
                    │                         ╲───────┬───────╱
         ┌──────────┴───────────┐                     │ ja
         │  erzeuge Multifokusbild│                   ↓
  40 ──  │  und 3D Oberflächenprofil│          ╱───────────────╲
         │  aus den Bildarrays  │             ╱  Endposition   ╲   nein   ┌──────────────┐36  ┌──────────────┐38
         │  in x, y - Richtung  │      56 ── ╱  n · Δz1         ╲ ──────→ │ Grabbe Bild  │──  │ Steuere      │──
         └──────────┬───────────┘            ╲  Objektivpiezo   ╱          │ und speicher │    │ Piezoobjektiv│
                    │                          ╲  erreicht?     ╱          │ es           │    │ um Δz1       │
         ┌──────────┴───────────┐               ╲───────┬──────╱          └──────────────┘    │(objektiv) in │
  42 ──  │ Speichere Ergebnisse │                       │ ja                                  │ neue         │
         └──────────┬───────────┘                       ↓                                    └──────────────┘
         ┌──────────┴───────────┐
  44 ──  │  Ende des Programmes  │
         └──────────────────────┘
```

Fig. 14

30

**30** — Start des Programmes

**32** — Fahre Tisch und Objektivpiezo in die Startpositionen x, y, z

**50** — Endposition des Scanbereiches Δy des Tisches in y Richtung erreicht? — nein / ja

**52** — erzeuge für jede gescannte Bildebene in z ein Bildmosaik (Zusammensezten der Bilder in x, y Richtung)

**40** — erzeuge Multifokusbild und 3D Oberflächenprofil aus den Bildarrays in x, y - Richtung

**41** — entfalte x,y,z - Array - Multifokusbild mit dem Apparateprofil des Mikroskopes

**42** — Speichere Ergebnisse

**44** — Ende des Programmes

**64** — Fahre den Tisch in die nächste Bildposition in der y - Richtung

**62** — Fahre den Tisch in x - Richtung zurück in die Startposition

**60** — Fahre das Objektiv per Piezo zurück in die Startposition

**58** — Fahre den Tisch in die nächste Bildposition in der x - Richtung

**48** — Fahre das Objektiv per Piezo zurück in die Startposition

**54** — Endposition des Scanbereiches Δx des Tisches in x Richtung erreicht? — nein / ja

**56** — Endposition n ' Δz1 Objektivpiezo erreicht? — nein / ja

**36** — Grabbe Bild und speicher es

**38** — Steuere Piezoobjektiv um Δz1(objektiv) in neue

Fig. 15

Fig. 16

30 — Start des Programmes

32 — Fahre Tisch und Objektivpiezo in die Startpositionen x, y, z

50 — Endposition des Scanbereiches Δy des Tisches in y Richtung erreicht?

nein →

60 — Fahre das Objektiv per Piezo zurück in die Startposition

62 — Fahre den Tisch in x - Richtung zurück in die Startposition

64 — Fahre den Tisch in die nächste Bildposition in der y - Richtung

ja ↓

52 — erzeuge für jede gescannte Bildebene in z ein Bildmosaik (Zusammensezten der Bilder in x, y Richtung)

39 — entfalte alle x,y - Bildmosaike mit dem Apparateprofil des Mikroskopes

40 — erzeuge Multifokusbild und 3D Oberflächenprofil aus den Bildarrays in x, y - Richtung

42 — Speichere Ergebnisse

44 — Ende des Programmes

54 — Endposition des Scanbereiches Δx des Tisches in x Richtung erreicht?

nein →

48 — Fahre das Objektiv per Piezo zurück in die Startposition

58 — Fahre den Tisch in die nächste Bildposition in der x - Richtung

ja ↓

56 — Endposition n · Δz1 Objektivpiezo erreicht?

nein →

36 — Grabbe Bild und speicher es

38 — Steuere Piezoobjektiv um Δz1(objektiv) in neue

ja

**Fig. 17**

- 30 — Start des Programmes
- 32 — Fahre Tisch und Objektivpiezo in die Startpositionen x, y, z
- 50 — Endposition des Scanbereiches $\Delta y$ des Tisches in y Richtung erreicht? (ja / nein)
- 54 — Endposition des Scanbereiches $\Delta x$ des Tisches in x Richtung erreicht? (ja / nein)
- 66 — Endposition des Scanbereiches $\Delta z2$ des Tisches in z Richtung erreicht? (ja / nein)
- 56 — Endposition $n \cdot \Delta z1$ Objektivpiezo erreicht? (ja / nein)
- 38 — Steuere Piezoobjektiv um $\Delta z1$(objektiv) in neue Position
- 36 — Grabbe Bild und speicher es
- 68 — Fahre das Objektiv per Piezo zurück in die Startpostion
- 69 — Fahre den Tisch in die Position $(n+1) \cdot \Delta z1$(Objektiv)
- 70 — Fahre den Tisch in z-Richtung zurück in die Startpostion
- 72 — Fahre den Tisch in z-Richtung zurück in die Startpostion
- 60 — Fahre das Objektiv per Piezo zurück in die Startpostion
- 48 — Fahre das Objektiv per Piezo zurück in die Startpostion
- 62 — Fahre den Tisch in x-Richtung zurück in die Startposition
- 58 — Fahre den Tisch in die nächste Bildposition in der x-Richtung
- 64 — Fahre den Tisch in die nächste Bildposition in der y-Richtung
- 52 — erzeuge für jede gescannte Bildebene in z ein Bildmosaik (Zusammensezten der Bilder in x, y Richtung)
- 40 — erzeuge Multifokusbild und 3D Oberflachenprofil aus den Bildarrays in x, y-Richtung
- 42 — Speichere Ergebnisse
- 44 — Ende des Programmes

EP 1 436 658 B1

**30** — Start des Programmes

**32** — Fahre Tisch und Objektivpiezo in die Startpositionen x, y, z

**50** — Endposition des Scanbereiches Δy des Tisches in y Richtung erreicht?  — nein / ja

**52** — erzeuge für jede gescannte Bildebene in z ein Bildmosaik (Zusammensetzen der Bilder in x, y Richtung)

**40** — erzeuge Multifokusbild und 3D Oberflächenprofil aus den Bildarrays in x, y - Richtung

**41** — entfalte x,y,z - Array - Multifokusbild mit dem Apparateprofil des Mikroskopes

**42** — Speichere Ergebnisse

**44** — Ende des Programmes

**64** — Fahre den Tisch in die nächste Bildposition in der y - Richtung

**62** — Fahre den Tisch in x - Richtung zurück in die Startposition

**60** — Fahre das Objektiv per Piezo zurück in die Startposition

**70** — Fahre den Tisch in z - Richtung zurück in die Startposition

**58** — Fahre den Tisch in die nächste Bildposition in der x - Richtung

**48** — Fahre das Objektiv per Piezo zurück in die Startposition

**72** — Fahre den Tisch in z - Richtung zurück in die Startposition

**54** — Endposition des Scanbereiches Δx des Tisches in x Richtung erreicht? — nein / ja

**69** — Fahre den Tisch in die Position (n + 1)· Δz1(Objektiv)

**68** — Fahre das Objektiv per Piezo zurück in die Startposition

**66** — Endposition des Scanbereiches Δz2 des Tisches in z Richtung erreicht? — nein / ja

**56** — Endposition n · Δz1 Objektivpiezo erreicht? — nein / ja

**36** — Grabbe Bild und speicher es

**38** — Steuere Piezoobjektiv um Δz1(objektiv) in neue Position

**Fig. 18**

Start des Programmes

30

Fahre Tisch und Objektivpiezo in die Startpositionen x, y, z

32

50 — Endposition des Scanbereiches $\Delta y$ des Tisches in $y$ Richtung erreicht? — nein / ja

52 — erzeuge für jede gescannte Bildebene in z ein Bildmosaik (Zusammensezten der Bilder in x, y Richtung)

39 — entfalte alle x,y - Bildmosaike mit dem Apparateprofil des Mikroskopes

40 — erzeuge Multifokusbild und 3D Oberflächenprofil aus den Bildarrays in x, y - Richtung

42 — Speichere Ergebnisse

44 — Ende des Programmes

64 — Fahre den Tisch in die nächste Bildposition in der y - Richtung

62 — Fahre den Tisch in x - Richtung zurück in die Startposition

60 — Fahre das Objektiv per Piezo zurück in die Startpostion

70 — Fahre den Tisch in z - Richtung zurück in die Startpostion

58 — Fahre den Tisch in die nächste Bildposition in der x - Richtung

48 — Fahre das Objektiv per Piezo zurück in die Startpostion

72 — Fahre den Tisch in z - Richtung zurück in die Startpostion

54 — Endposition des Scanbereiches $\Delta x$ des Tisches in x Richtung erreicht? — nein / ja

69 — Fahre den Tisch in die Position $(n + 1)^k \Delta z1(\text{Objektiv})$

68 — Fahre das Objektiv per Piezo zurück in die Startpostion

66 — Endposition des Scanbereiches $\Delta z2$ des Tisches in z Richtung erreicht? — nein / ja

56 — Endposition $n \cdot \Delta z1$ Objektivpiezo erreicht? — nein / ja

36 — Grabbe Bild und speicher es

38 — Steuere Piezoobjektiv um $\Delta z1(\text{objektiv})$ in neue Position

Fig. 19

Fig. 20

Fig. 21

30 — Start des Programmes

32 — Fahre Tisch und Objektivpiezo in die Startpositionen x, y, z

50 — Endposition des Scanbereiches Δy des Tisches in y Richtung erreicht ? — nein / ja

64 — Fahre den Tisch in die nächste Bildposition in der y - Richtung

62 — Fahre den Tisch in x - Richtung zurück in die Startposition

60 — Fahre das Objektiv per Piezo zurück in die Startposition

70 — Fahre den Tisch in z - Richtung zurück in die Startposition

86 — Fahre den Tischpiezo zurück in die Startpostion

52 — erzeuge für jede gescannte Bildebene in z ein Bildmosaik (Zusammensezten der Bilder in x, y Richtung)

54 — Endposition des Scanbereiches Δx des Tisches in x Richtung erreicht ? — nein / ja

58 — Fahre den Tisch in die nächste Bildposition in der x - Richtung

48 — Fahre das Objektiv per Piezo zurück in die Startposition

72 — Fahre den Tisch in z - Richtung zurück in die Startpostion

84 — Fahre den Tischpiezo zurück in die Startpostion

74 — x, y Feinjustage per Tischpiezo

69 — Fahre den Tisch in die Position (m+1) * (n + 1)* Δz1 (Objektiv)

68 — Fahre den Objektivpiezo zurück in die Startposition

82 — Fahre den Tischpiezo zurück in die Startpostion

40 — erzeuge Multifokusbild und 3D Oberflächenprofil aus den Bildarrays in x, y -

66 — Endposition des Scanbereiches Δz2 des Tisches in z Richtung erreicht ? k Durchläufe — nein / ja

80 — Fahre den Tischpiezo in die Position (n + 1)* Δz(Objektiv)

78 — Fahre das Objektiv per Piezo zurück in die

41 — entfalte x,y,z - Array - Multifokusbild mit dem Apparateprofil des Mikroskopes

76 — Endposition Tischpiezo erreicht ? m Durchläufe — nein / ja

42 — Speichere Ergebnisse

56 — Endposition n * Δz1 Objektivpiezo erreicht ? n Durchläufe — nein / ja

36 — Grabbe Bild und speicher es

38 — Steuere Piezoobjektiv um Δz1(objektiv) in neue Position

44 — Ende des Programmes

Fig. 22

37

EP 1 436 658 B1

Fig. 23

EP 1 436 658 B1

38

**IN DER BESCHREIBUNG AUFGEFÜHRTE DOKUMENTE**

**In der Beschreibung aufgeführte Patentdokumente**

- US 6128077 A

- US 6055097 A